# EUROPEAN PATENT SPECIFICATION

(11) **EP 3 989 105 B1**
(45) Date of publication and mention of the grant of the patent: **24.04.2024**
(21) Application number: 20203152.2
(22) Date of filing: 21.10.2020
(51) Int. Cl.: G06V 10/44, G06V 20/52, G06V 10/82, G06V 10/764, G07G 1/00

(54) **EMBEDDED DEVICE BASED DETECTION SYSTEM**
DETEKTIONSSYSTEM BASIEREND AUF EINER EINGEBETTETEN VORRICHTUNG
SYSTÈME DE DÉTECTION BASÉ SUR UN DISPOSITIF INTÉGRÉ

(43) Date of publication of application: 27.04.2022
(73) Proprietor: Nomitri GmbH, 10115 Berlin (DE)
(72) Inventor: FIEDLER, Max, 10115 Berlin (DE); LE-FIEDLER, Trinh, 10115 Berlin (DE)
(74) Representative: Schwarz, Claudia

(56) References cited:
- US-A1- 2018 197 218
- US-A1- 2019 236 583
- SANCHITA ROY ET AL: "SMART SHOPPING CART FOR AUTOMATED BILLING PURPOSE USING WIRELESS SENSOR NETWORKS", SENSORCOMM 2013 : THE SEVENTH INTERNATIONAL CONFERENCE ON SENSOR TECHNOLOGIES AND APPLICATIONS, [Online] vol. 172, 1 January 2013 (2013-01-01), page 168, XP055793343, ISBN: 978-1-61208-296-7 Retrieved from the Internet: URL:http://interiorkraft.com/upload_pdf/se nsorcomm_2013_7_30_10155.pdf> [retrieved on 2021-04-06]
- TIFFANY YU-HAN CHEN ET AL: "Glimpse", EMBEDDED NETWORKED SENSOR SYSTEMS, ACM, 2 PENN PLAZA, SUITE 701 NEW YORK NY 10121-0701 USA, 1 November 2015 (2015-11-01), pages 155-168, XP058077077, DOI: 10.1145/2809695.2809711 ISBN: 978-1-4503-3631-4
- HAOYU ZHANG?+ ET AL: "Live Video Analytics at Scale with Approximation and Delay-Tolerance", USENIX, USENIX, THE ADVANCED COMPUTING SYSTEMS ASSOCIATION , 27 March 2017 (2017-03-27), pages 384-399, XP061025196, Retrieved from the Internet: URL:https://www.usenix.org/sites/default/f iles/nsdi17_proceedings_interior.pdf [retrieved on 2017-03-27]
- MOHAN DIVYA ET AL: "Adaptive Video Subsampling For Energy-Efficient Object Detection", 2019 53RD ASILOMAR CONFERENCE ON SIGNALS, SYSTEMS, AND COMPUTERS, IEEE, 3 November 2019 (2019-11-03), pages 103-107, XP033750570, DOI: 10.1109/IEEECONF44664.2019.9048698 [retrieved on 2020-03-26]

## Description

The present invention relates to video-based object detection on a hardware resource restricted embedded device. The system, method and processing unit according to the present invention are specifically configured for video-based object detection and may be used for detecting shopping items in a shopping basket structure in a completely autonomous manner of an embedded device.

The problem of detecting objects in image or video data is known in computer science. Several solutions exist.

For example, US 9,934,447 B2 discloses an Al-based approach with deep learning models for object detection in the field of image analysis and object recognition in computer vision.

The document "Adaptive Video Subsampling For Energy-Efficient Object Detection", Mohan Divya et al.; 2019 53rd Asilomar Conference on Signals, Systems, and Computers IEEE (2019-11-03), pages 103-107, describes adaptive video subsampling for video object detection at run-time, in which a measure for objectness is used based on four image cues, multi-scale saliency, color contrast, edge density and straddleness.

The document "Life Video Analytics at Scale with Approximation and Delay-Tolerance", Haoyu Zhang et al., Usenix, The Advanced Computing Systems Associated (2017-03-27), pages 384-399, describes a video analytics system denoted as "VideoStorm" that scales to processing thousands of video streams in large clusters. The core aspect is a scheduler that considers resource-quality profiles of queries and tolerance to lag in processing. As an example, an Azur cluster with 101 machines is used.

The document "Glimpse: Continuous, Real-Time Object Recognition on Mobile Devices", Tiffany Yu-Han Chen et al., Embedded Networked Sensor Systems, ACM (2015-11-01), pages 155-168, describes an application denoted as "Glimpse" for performing continuous, real-time object recognition using full-motion videos captured by a camera-equipped mobile device. "Glimpse" then runs on one or more server machines based on frames sent from the mobile device to the server.

The document "Smart Shopping Cart for Automated Billing Purpose using Wireless Sensor Networks", Sanchita rao et al., Sensorcomm 2103: The 7th international conference on sensor technologies and applications, vol 172 (2013-01-01), page 168, describes a system comprising a smart shopping cart using a Wireless Sensor Network (WSN) to connect with a base station at a payment counter. A product is placed on a special slab of the cart, an image taken and a barcode scanned and sent to the base station. The base station fetches relevant information, and a second image is taken of the product before the slab lets it into the cart, also denoted as trolley. Inside the trolley, the weight of the product is estimated and also transmitted to the base station. At the base station, the weight is compared with a weight in a database.

The document US 2019/236583 A1 describes an association of a physical shopping cart to a mobile computing device, in which the physical shopping cart includes a product detection system and the mobile computing device obtains a cart identifier for the shopping cart to establish the association and, once the association is established, displays a real-time summary of the products in the shopping cart on its user interface.

The document US 2018/197218A1 describes a method for object detection in a smart shopping container. Different cameras provide images to a network device, which has received a signal from a user device associated with a portable container. The network device generates a scene from multiple images from the different cameras and associates a retail item with a stock-keeping unit (SKU) creating a product list. A vision service cloud platform comprises logical components which in particular comprise an object identification logic and object detection logic.

These existing approaches provide good results but require extensive hardware resources.

In case model-based object detection is to be solely executed on an embedded device, like a mobile device or edge device, with restricted resources these known approaches may no longer be of help.

Therefore, there is a need for providing an approach for making it possible to use deep learning models in an embedded manner (i.e. on embedded devices, being resource restricted). Further, there is a need to allow for offline processing, meaning that object detection by means of deep learning models may be performed completely autonomously without internet or server access (i.e. locally on the embedded device). More specifically, for the use case of shopping item detection in a shopping basket, the approach has to comply with data privacy requirements and security issues. In state of the systems, a cloud-based solution may be used. However, in these cloud-based scenarios, if the deep learning models are run on a backend server, the captured video data needs to be centrally aggregated and processed which requires the transmission of such data and its temporary storage in at minimum working memory on the server side. This leads to the following privacy and security issues:
- Video data messages can be intercepted and read in both the local network of the retail store as well as on the general internet connection to the backend server if they are at any stage not properly encrypted;
- Users and retailers have to trust the party running the algorithms on the backend server to not persistently store their data and/ or use it for other purposes than the ones understood and agreed to by them;
- The backend server itself could be hacked and all processed video data could be obtained by hackers who in turn sell or use them for all kinds of other Al-enabled analysis or other illicit purposes. Individual user devices could obviously hacked as well, but this would give attackers access to only the data of that particular user, while a successful hack into the backend server would provide access to the collective video data of all users.

Based on the above, the object of the present invention is to provide deep learning models for object detection which may be deployed on a hardware restricted embedded device. The deep learning models may, in particular, be trained for detecting shopping items in a shopping basket for cash-desk-less payment in a store, wherein object detection should be completely autonomous without the requirement of server access for the inference phase. Moreover, data security and data privacy requirements for related message exchange should be fulfilled.

According to a first aspect the present invention relates to a computer-implemented method for object detection according to claim 1.

The embedded device is a (smart) electronic device with data exchange functionality and with limited data processing functionality. The embedded device may be an edge device. Generally, the embedded device has restricted computing resources, like restricted memory capacity, restricted processing capacity, restricted storage. The embedded device comprises a processing unit for data processing and e.g. may comprise an FPGA. The embedded device may be a mobile device, like e.g. a smartphone with integrated camera and with a processing unit for data processing of a camera feed (video stream). The embedded device may be equipped with wired and wireless network interfaces according to different transmission protocols, like WiFi as one type of local area network (LAN), e.g. based on IEEE 802.11 standard protocol family, Low-power wide-area networks (LPWAN), cellular or mobile data services, like 3G/4G/5G, or in the radio frequency range: Bluetooth, WLAN, ZigBee, near field communication (NFC), Wibree or WiMAX.

Generally, the solution provided herein serves for providing model-based object detection which can be executed on embedded devices, in particular FPGA, with limited computing resources. In a preferred embodiment, the embedded device may be a mobile device, like a smartphone. Alternatively, or cumulatively, the embedded device may be a camera-chipset-module. The camera-chipset-module preferably comprises at least one camera and a chipset, e.g. an electronic circuit board with processing, storage functionality and an interface to the at least one camera.

The basket structure may be a movable hollow body for collecting objects such as the objects are prevented from falling out of the basket structure during movement of the same. The basket structure may be a shopping cart in different dimensions and heights. Typically, the basket structure may comprise a wire mesh basket. The basket structure may be a container of e.g. cylindrical form with upper opening for putting e.g. shopping items into. Further, the basket structure comprises a handle for movement.

The registration procedure is a digital data exchange between the embedded device and an administration backend server or a registration backbone. It has to be noted that that the models are not executed on the administration server; instead the models are executed locally on the embedded device only. The administration server only has the functionality for administration (e.g. storage of a user profile and user data, and session data) and for providing model updates. The registration procedure may be implemented as handshake procedure and may perform a preconfigurable registration protocol for secure authentication of the embedded device. The handshake procedure may serve for registering the user of the embedded device at a preferably cloud-based administration server. (exchange of user credentials, profile data, and/or preferences). According to a first embodiment there may be a single registration procedure for several sessions (comprising related data processing and in particular execution of the object detection algorithm, ODA) of a user. According to a second embodiment there may be (required) a single registration procedure for one single session. A session may relate to a time interval in which the object detection is used and performed. The session may e.g. be a shopping session in a specific store, wherein the session is not necessarily assigned to a specific store; it is possible to use the object detection on the embedded device for several different stores. Execution of the object detection algorithm requires a successful registration procedure. However, the successful registration procedure is not sufficient for object detection algorithm execution. As the object detection algorithm is based on DL models, the DL models first have to be deployed on the embedded device as a prerequisite. The model download may be executed via a wireless connection to an administration server, e.g. via mobile network. The model download may be triggered by a trigger signal. According to a preferred embodiment, a configuration phase may be provided. In the configuration phase it may be determined which type of registration procedure may be used (beacon based, by receiving a QR code signal, by a handshake procedure as explained above etc.).

The trigger signal is an electronic signal which represents a state of the embedded device, in particular at the start of a session of aggregating objects in the basket structure. The state may represent that the user of the embedded device, or smartphone, has entered a shop or wants to start shopping. The trigger signal may be calculated from a position signal, based on the geographical position of the smartphone, e.g. a position detection signal, GPS. The trigger signal may preferably be provided by receiving scan data of an optical code, like a QR code or barcode, being attached at the entrance area of a certain shop. Thus, if the user may start a shopping session by using the cash deskless retail and payment system, he or she scans e.g. the QR code of the shop and may proceed further. The optical code may comprise an identification segment for identifying the respective shop. The trigger signal may be implemented in different formats, e.g. as a string type dataset or as a binary signal. The trigger signal may also be derived from other signals or actions. For example, it may be preconfigured that if the user activates a button on a user interface of the object detection application residing on his mobile phone or if he or she connects the mobile phone to the attachment means for the first time of a session in a specific shop, this may initiate transmission of a signal, which is transformed to the trigger signal. After that, all or a part of the DL models are loaded or updated to the processing unit. This has the major technical advantage that executing the object detection algorithm may be performed completely offline and without any internet or network connection to a retailer or administration server.

Generally, the algorithm makes use of different DL models. The DL models have been trained in a preceding training phase. For the use-case described in this patent application all models are trained on video data recorded by at least one camera that is/are directly mounted on/ attached to a shopping container (e .g. cart or basket), looking into the container. The camera(s) may be integrated smartphone cameras or standalone USB cameras.

The object detection and tracking model is trained on video sequences of different people putting shopping articles into or out of a shopping container (e. g. a shopping cart), learning to predict the position and size of specific object classes (e. g. "item", "hand", "barcode") as well as additional attributes of these objects (e. g. "moving inwards/ outwards", specifics of the object's shape and others).

The re-identification model is trained on pairs of video sequences showing either identical or different objects and tasked to produces descriptors (i.e. floating point vectors) that produce a high similarity scores according to a given similarity measure (e.g. cosine similarity) for identical and low similarity scores for unidentical objects.

The change detection model is trained on pairs of images from the same video sequence and tasked with identifying visual differences in both images that are due to moving objects while ignoring smaller differences from standard image capturing noise and small relative movements between camera and shopping container.

The segmentation model is trained on video sequences capturing the shopping container and is tasked to pixel-wise segment the areas outside and inside of the shopping container allowing for a pixel-wise differentiation between the two.

The movement direction classification model is trained on video sequences of different people putting shopping articles into or out of a shopping container and is tasked with predicting if a given track taking place in the video started/ ended outside or inside the shopping container. A "track" in this context means the complete position manipulation of an item (i.e. shopping article) which starts with the item entering the field of view of the camera or being picked up by a hand (or multiple hands) inside the field of view of a camera and ends with the item leaving the field of view of the camera or a hand letting it go inside the field of view and the item ceasing to move relative to the camera.

A part of the models (e.g. an object detection and tracking model) is shop specific and is thus loaded for each session in a specific shop after the trigger signal has been issued. Another part of the models is generic and not shop-specific and may be used for a variety of different shops or retailers. These models or at least a part thereof may be loaded during the registration procedure, in particular, at the end thereof. The generic models comprise a re-identification model and a change detection model and the movement classification model.

Connecting the embedded device to the basket structure is performed by using attachment means which are provided at the basket structure. "Connecting" has two aspects and comprises establishing a data connection by means of providing data exchange between the smartphone and the basket or components thereof and may further comprise establishing a physical or mechanical connection (e.g. by putting the smartphone in receptacles at the attachment means to keep the smartphone in place).In particular connecting may comprise power supply for e.g. charging the smartphone during connection. Further, the smartphone may be coupled with other embedded devices of the system, e.g. camera-chipset-modules by wired connection or wireless connection means, e.g. using Wi-Fi or other wireless protocols.

The object detection algorithm, ODA, is a computer algorithm which is specifically designed to be executed on resource restricted devices, like embedded devices. The ODA receives as input a video stream of the camera and provides as output a result dataset. The result dataset comprises an object classification of the detected objects in the input video stream, based on accessing a local storage on the embedded device with different models for object detection, which are preferably implemented as neural network system. The neural network(s) are provided in a trained state. The training may be supervised, semi-supervised, unsupervised, by using a generative adversarial network, GAN. Training will preferably be executed on the administration server. The ODA may comprise a segmentation step, which segments a frame of the video sequence in to inside of the basket structure and outside thereof. The segmentation may be implemented by means of a segmentation model or by means of program code. Preferably, the segmentation may only be executed once, at the start of a shopping session or even once for several sessions. In a preferred embodiment, the segmentation may be carried out whenever a movement of the embedded device relative to the basket structure is detected for e.g. by means of a gyro sensor.

The ODA is based on different deep learning models (DL models) which are stored in a trained form locally on the embedded device for local execution, in particular by means of the processing unit. This has the technical advantage that the object detection task may be carried out autonomously on the embedded device without any interaction with a server. No external data exchange (outside of the embedded device) is necessary. Thus, it is not necessary to send image data with detected objects to an e.g. central or backend server. No internet connection is necessary, and the object detection may even be carried out without internet access or network access. This improves data privacy and makes the method independent form network access during the inference phase.

In a preferred embodiment a single shot detector network (SSD) is used as a head network. The SSD head network performs the detection of objects in an image and the simultaneous prediction of bounding boxes for the objects. It is applied to each level of the FPN in parallel to have access to multiple resolutions/scales. In other embodiments, the SSD might however be replaced by another head network that rather predicts a heatmap (or approximate segmentation) for the objects instead of bounding boxes. In yet another embodiment, the SSD might be replaced with a Centernet head network that predicts objects centerpoints' and corresponding bounding boxes.

The object detection and tracking model serves for detecting and locating objects of interest (items, body parts, like hand, part of the basket structure...) in the input video stream via e.g. prediction of bounding box and possibly centroid coordinates as well as classifying them. Preferably, a Centernet-based network is used.

Aggregation of objects means physically putting objects in close proximity, e.g. putting shopping items in the basket structure, like a shopping trolley or another carrier during shopping.

The result dataset is the result of the execution of the ODA. The result dataset may comprise a sequence of segments, indicating each detected item. Thus, the result dataset is extended each time a new segment is to be included item, representing the state that a new item has been detected. The result dataset may, thus. be thought of as an extendable list. The result dataset indicates and identifies detected items in the basket structure. The result dataset may therefore comprise a classification result of a content in the basket structure, indicating aggregated items which should be purchased, based on the received video stream on a previously defined taxonomy. In particular, the result dataset may e.g. indicate shopping items and its amounts in the shopping basket. The result dataset may optionally contain meta data, in particular meta data having a time stamp. This may serve for a more detailed analysis of object placement and movement. It is important to note, that the result dataset does not contain any image data of the received video stream. This feature is important to safeguard privacy of the data and to delimit data transmission capacity as well as only the classification result is transmitted to the administration server or to other entities outside the embedded device. The result dataset comprises information for detecting and tracking object instances throughout the (input) video streams. The result dataset may have a textual format. The result dataset represents a virtual content of the shopping basket with the detected objects in a data compressed data structure.

The result dataset may be transmitted to a backend system of the retailer and/or to the administration server. The transmission may be initiated upon receiving a transmission signal. The transmission signal may be provided upon receiving a user input on a user interface of the embedded device, e.g. representing the user wants to finish his or her shopping and start the payment process. The transmission signal may also be provided by an application, residing on the embedded device, indicating that the embedded device is within close proximity to a counter or cashier system. Optionally the transmission signal may be provided by an (external) position detector system. Alternatively, the position detector system may be used for verification whether the payment procedure has been finished correctly in order to release the user from the shop with the purchased items. The transmission signal will trigger a payment process automatically. The payment process may be executed via the administration server and/or via a counter within the shop, in which the user has selected his shopping items.

The payment procedure may be executed by using different options. First, the user may pay at a terminal of the retailer. The application (in short: app) receives a specific identifier for the payment of the specific item by the administration backend server. The app may display the identifier or an optical code (e.g. QR) to be presented on the retailer's terminal so that the terminal may scan it. The identifiers and/or the codes may be provided in an aggregated manner (e.g. as a list) so that payment may be calculated in one step for all aggregated items in the basket structure. Thus, a code, e.g. an optical code, like a barcode or a QR code or an acoustic signal for each detected item within the detected objects is generated and provided and presenting the generated code to a user interface of the embedded device, e.g. the mobile phone and/or to a counter of the shop. Second, the user may pay without the need of a terminal. The user may instead pay via the app on his or her mobile phone directly by using a payment software kit with interaction with the administration backend server and a retailer backend server.

An "item" refers to a shopping item whereas "object" refers to any object that could be of interest, including "item" but also other objects in the detected images like hands or barcodes.

"Object detection" refers to identifying or detecting objects within an image or frame of the video sequence and information where they are located within the image and thus providing location information as well (e.g. bounding box or heatmap).

"Image classification" refers to classifying which objects are part of the image (without detecting where), thus result is coarser, less detailed than object detection. Generally, the goal is to classify the content of an image based on a previously specified taxonomy.

"Object segmentation" refers to delineate the object, e.g. by means of masks or boxes. Bounding boxes can be generated from the segmentation output. Segmenting may be construed as distinguishing between background in an image (frame) and an item (item, product).

The processing unit is a computer processing unit for automatic data processing. The processing unit may be provided as electronic circuit board or parts thereof, including inter alia FPGA, GPU, CPU, etc. The processing unit serves for execution of the computer-implemented method for object detection. The processing unit may be part of a mobile device and/or a camera chipset module. Preferably, the processing unit is used from several different electronic instances, being provided locally at the basket, like the mobile device and the camera chipset module.

The method may use an application, comprising the ODA, implemented on the processing unit. The application may guide the user of the embedded device through the shopping procedure. The application resides on the embedded device. There do exist several implementation options. First, the embedded device may be provided as mobile phone of the user and the application solely resides on the phone. Second, a set of camera-chipset-modules, being in data exchange with the mobile phone may be used in addition or alternatively. In the latter scenario, the application may be deployed as distributed system, wherein a first part of the processing workload and/or a part of the DL models are distributed over the set of camera-chipset-modules and wherein a second part is deployed on the mobile phone. For inter-process communication Bluetooth Low Energy (BLE) may be used which provides a throughput of around 1 Mbit/s. For this inter-process communication, the camera-chipset-module acts as a GATT (Generic Attribute Profile) Server, which stores locally the data and the mobile phone acts as a GATT Client, which accesses the data on the remote server by read, write and modify requests. The camera-chipset-module's GATT server defines a set of services, each service breaks the data into logic entities which are called characteristics. A service provided by the GATT server may be defined as the results of the machine learning inference, and its characteristics may at least comprise a timestamp of the event, camera characterization, input image, final result and/or intermediate result, all of which can be accessed by the mobile phone in order to obtain a final combined result. The communication may be asynchronous and rely on GATT notifications. In this way the communication will be initiated by the camera-chipset-module as soon as it has new data ready, the mobile phone gets notified and starts requesting the required characteristics from the available services. The application may execute the handshake registration procedure. The application may provide or process the trigger signal. The application may preferably serve to initiate the ODA. The application may further be configured to provide the transmission signal or may receive the same from another module.

According to a preferred embodiment, besides the mechanical components (e.g. the basket structure and attachment means) the digital or electronical architecture or system infrastructure consists of at least two components:
1. the embedded device with attached or integrated camera, the embedded device may preferably be a user's mobile phone and/or a camera-chipset module, attached to the basket structure;
2. a backend administration server (in the following also simply called: administration server or server). The administration server provides current product information (price, name, possibly thumbnail image), potentially handles payment processes and collects statistics as well as provides the latest machine learning models for the respective store. The data exchange between the administration server and mobile phone can be restricted to the entrance/exit area of a store, making data connection between the mobile phone and the administration server throughout the session (aggregation of objects of a store in the basket structure) unnecessary. The administration server is a computer server with data exchange functionality and with processing resources and memory resources. The administration server provides administration functionality for the application residing on the embedded device and/or serves for updates, for payment processing, analysis, report generation and/or as recommendation system. The administration backend server is not configured for running of deep learning (DL) models for object detection. DL-based object detection is completely executed on the embedded device. The backend administration server is to be distinguished from a retailer's server, which may be used for the payment procedure and for providing its product data (like price tags etc.).

In another embodiment, additional electronical components may be added to the system. In particular, at least one camera-chipset-module may be (permanently or non-permanently) attached to the basket structure, being in data connection with the mobile device. Preferably, one to three camera-chipset-modules may be used for data processing. The mobile device receives model updates via data connection to the backend administration server and may serve as intermediary to forward at least a part of the received models or model updates to the camera chipset-modules. In a preferred embodiment, the camera-chipset-module may not need a direct connection to the backend server.

The embedded device may preprocess single frames from the video stream of the connected camera by applying various image processing algorithms. The preprocessing operations may comprise contrast enhancement, smoothing, color-space conversion, rotation, resizing, normalization, edge detection, filtering the image with kernels and/or other image preprocessing procedures. The results of this preprocessing are then fed to one or multiple locally deployed models and sends their results to the shopping assistant application (app) running on the embedded device, e.g. the mobile phone. The app on the smartphone then aggregates these results with further results obtained from models running on the smartphone itself, which analyze the phone's camera input. Additionally, the mobile phone of course provides the user interface and communication channel to the customer via the app.

In the embodiments. executing the object detection algorithm, ODA, and in particular executing the object detection and tracking model comprises classifying a movement direction in at least four classes, in particular in an IN-to-OUT, IN-to-IN, OUT-to-OUT class and in an OUT-to-IN class and/or wherein classifying may be executed by means of accessing a fourth storage with a movement direction classification model. This improves performance and quality of the object detection task.

In another preferred embodiment, the result dataset is provided in a numerical or alphanumerical format and does not contain any image or video data. This helps to safeguard data security as no image data are transferred outside the mobile phone. No relation between the user of the mobile phone and the detected items are deducible outside from the phone (point of origin). In particular, the detected images or video stream(s) are not provided to the outside of the mobile phone.

In another preferred embodiment, the embedded device is equipped with a scanning application by using at least one camera which is used for scanning an optical code, in particular a binary 2D code, attached to an item, for calculating a scan dataset for the respective item, which may serve as reference identification for the respective item for the ODA.

The reference identification may serve as verification, in particular serves to verify the result dataset provided by the object classification based on the object detection and tracking model by means of the reference result, based on the optical code. This feature helps to improve security of the object detection and to prevent theft.

In another preferred embodiment, the processing unit is embedded in an integrated circuit board and/or wherein the processing unit may be part of an FPGA. For example, the processing unit may be part of a FPGA, which in turn may be deployed on e.g. an ARM processor. Further, the processing unit may be integrated in an electronic chip as a core.

In a preferred embodiment, the processing unit may be deployed on a mobile device and/or on a camera-chipset-module. The processing unit may be part of an embedded device.

In another preferred embodiment, the ODA may be based on a bounding box approach. The result dataset may accordingly consist of a list of box coordinates together with classification scores and may optionally contain meta data, in particular meta data having a time stamp and/or wherein the result dataset does not contain image data of the received video stream.

Generally, the bounding box approach refers to a method of performing object detection by predicting ideally exactly one bounding box for each detected object in an image which frames or completely represents the respective objects. Typically, objects are also classified into different object types, such as item, hand and barcode. This class information together with the bounding boxes poses the entire output of the approach. Object Detection Deep Learning models are typically implemented by employing a feature extraction backbone, on top of which a FPN (FPN: feature pyramid network) or DLA module (DLA: dense layer aggregation) is placed, which is then followed by the respective classification and bounding box prediction head networks (which can also share most of the parameters as in the SSD model referred to below).

State of the art object detectors are based on so called anchor boxes (as introduced in the Faster R-CNN paper by Shaoqing Ren, Kaiming He, Ross Girshick, and Jian Sun https://arxiv.org/pdf/1506.01497.pdf). However, the generations of such anchor boxes do not hand themselves to quantization making such network architectures a sub-optimal choice for embedded and edge applications. Therefore, an anchorless architecture is used, that learns to detect the centers of objects present in the image and then per center-box a corresponding size. These models rely on heatmaps as training targets and run faster and are fully quantizable and thus the superior choice for embedded and edge applications. As a known example for such an architecture see https://arxiv.org/pdf/1904.07850.pdf.

Still another option that can be used for object detection is a CenterNet model, which performs bounding box-based object detection, but in a somewhat different way: https://arxiv.org/pdf/1904.07850.pdf . The respective object detection model is then deployed onto the embedded device and used in the app as is already described here.

For performance reasons, we consider only one single type of object detection method to be deployed in the app. So, these different object detection models can be treated as mutually exclusive.

So, in a preferred embodiment, the ODA is based on a heat map approach, which makes use of a heatmap network as head network and wherein the result dataset consists of heatmaps of the detected objects, in particular in compressed form and/or wherein the result dataset does not contain image data of the received video stream. The heatmap approach replaces the SSD head with a different network which predicts how close each pixel is to the center of an object. There is generally one heatmap for each type of object, such as hand, item or barcode. These heatmaps are used to localize the objects in the image. Additional heatmaps are then possibly used to classify objects, for instance showing roughly where there is a full or an empty hand. More technical details relating to the basics of the heatmap networks can be found in https://www.sciencedirect.com/science/article/pii/S0895611118300806. The compression could either be a simple downsampling of the result heatmaps or a sparse representation where only the non-zero elements of the heatmaps (after some thresholding perhaps) with their coordinates are stored and may be further processed (or sent across).

In another preferred embodiment, the ODA is based on the centernet approach, where the result dataset consists of predicted coordinates for the object centroids and bounding boxes for the detected objects. The centernet approach replaces the SSD head with a different head network that predicts the centroid locations as well as the sizes of the bounding boxes around these center points. As the resulting dataset only contains of a list of coordinates, it is by design very small and does not require further compression.

Accordingly, according to a preferred embodiment, the object detection and tracking model may comprise a first module which is a feature extraction module, which may comprise a feature pyramid extraction network for providing a feature pyramid (set) in different image resolution levels. The feature pyramid extraction network may be a feed forward deep convolutional neural network, FF-CNN. For more details it is referred to the publication "Feature Pyramid Networks for Object Detection", Tsung-Yi Lin et al., IEEE Xplore, 2117 ff. The feature pyramid extraction network may preferably comprise depth-wise separable convolutions which allow for a sufficient predictive performance while comprising fewer parameters and hence being faster. In a further development Deep Layer Aggregation may be used as an extension of FPN. For more details it is referred to https://openaccess.thecvf.com/content_cvpr_2018/papers/Yu_Deep_Layer_Aggregation_CV PR_2018_paper.pdf.

In a preferred embodiment, the object detection and tracking model may comprise a second module with a head network, which is applied to all or a subset of the different levels of the provided feature pyramid in order to predict bounding boxes for objects to be detected.

As already mentioned above, in a preferred embodiment, the object detection and tracking model is configured to be executed on the embedded device, being resource restricted, in that
- a downsampling algorithm is executed, which down-samples the received video stream before accessing the object detection model;
- the object detection and tracking model is based on integer operations instead of floating point operations by using data-driven compression algorithms; and/or
- the object detection and tracking model is pruned.

The data driven compression algorithms refer to quantization algorithms which convert float32 weights and intermediate results of the network into int8 results to facilitate efficient execution in resource-constrained environments and special purpose hardware. To minimize the numerical error, the conversion is done based on statistics collected for all weights and activations over a reference dataset or by collecting this information already at training time together with quantization-aware weight updates. This may be carried out by first converting all weights of the model to int8 data type. In the second step, the model outputs (both final outputs as well as all the end results) for all elements in a previously designed calibration data set are computed. This information may then be used to compute the mean (here often also called zero-point) and standard deviation (also referred to as scale here) of all the intermediate and the final results. Based on these statistics the activations (intermediate results) and output of the model may then be converted to unsigned int8 data type and their float values can be approximated by computing float = quantized_int / scale + zero_point as is for instance explained in https:/ /pytorch.org/docs/ stable/quantization.html #quantized-tensors. But also, conversion to even smaller data types may be executed. But already the conversion to int8 data unlocks integer arithmetic which can be executed significantly faster than floating point arithmetic in most CPUs and especially ARM-based CPUs and other embedded and edge processing units and DL accelerators. A more sophisticated approach may be chosen where the model is not only evaluated on a calibration data set but additionally fine-tuned (hence trained after the main training has ended) taking into account the numerical error introduced by quantization. This means that during training on this data set, even though the model is still using float weights and activations, the quantized output is simulated based on the above statistics which are accumulated on-the-fly during training. This has the effect that the float gradient which is computed based on the (simulated quantized) output of the model with respect to some loss function does in fact point to the direction of the steepest improvement for the quantized weights instead of the actual float weights and thus the weight update is performed in an approximately optimal fashion for the quantized model. This method is thus referred to as quantization-aware training. Also, here, conversion to even smaller datatypes may also be applied and weights and activations or different parts of the model may as well be quantized with different bit-depths.

Generally, for matching resource requirements, specific proprietary model architectures are applied. In particular, it is analyzed how removing or shrinking parts of the overall architecture affects predictive and runtime performance and based on these analyses, the architecture is iteratively trimmed down. This mostly means reducing the number of channels in convolution kernels or removing entire layers. But activation functions for instance have an impact on the effectiveness of quantization techniques that are applied before deploying the models. So, these aspects are also considered when designing/modifying the architectures. Another aspect is how to incorporate the temporal structure of the video streaming directly in the architecture design, e.g. via attention modules. "Attention modules" or "attention layers" refer to a concept in Deep Learning where in essence the model computes a weighting of the individual dimensions of the input data based on the very same input data. The layer essentially decides what to pay attention to at runtime (hence the name). One reference paper for this is http://proceedings.mlr.press/v37/xuc15.pdf. The attention layers are used to help the model dealing with video data when it is presented with multiple frames combined at a time by allowing it to focus on individual frames more than others or even to focus on individual parts of individual frames more than the rest of the input.

In another aspect the invention refers to a processing unit, being provided in at least one embedded device, which is configured to execute the method as described above and comprises:
- A registration module for executing a registration procedure;
- An input interface to at least one camera for receiving a video stream;
- wherein the processing unit is configured for executing the object detection algorithm;
- An output interface for providing the result dataset

The processing unit may have an interface to at least one camera, wherein the camera may be integrated in the at least one embedded device and/or may be integrated in an external unit, in particular in a camera-chipset-module, being in data exchange with the processing unit.

The camera chipset module may be deployed in an automated distributed object detection system as an edge node.

In another aspect the invention refers to an automated distributed object detection system, configured to perform the method as mentioned before, comprising:
- a processing unit which may be implemented on a mobile device and/or on at least one camera-chipset-module and
- at least one camera with an interface to the processing unit.

The embedded device may optionally be provided with depth sensors. This feature helps to improve the security of the system as the depth sensors provide an important new dimension for the data on which the DL models make their predictions. Object tracking, movement direction classification and reidentification of objects will be facilitated to a high degree when it is possible to measure/approximate the object trajectories and shapes in 3D space instead of only 2D with perspectives distorting measures.

In a preferred embodiment, the automated distributed object detection system may additionally comprise a position detector system. However, the position detector system is not mandatory. The position detector system is an indoor system and may be based on beacons. The data exchange protocol may be based on NFC (Near-Field-Communication), Bluetooth or other wireless data exchange protocols.

The invention also relaters to a computer program comprising a computer program code, the computer program code when executed by a processor causing a processing unit to perform the steps of the method as described above.

### BRIEF DESCRIPTION OF THE DRAWINGS

- Fig. 1: is a schematic figure showing a basket structure by way of example with aggregated objects and an embedded device attached thereto by means of attachment means according to a first preferred embodiment.
- Fig. 2: shows the basket structure according to a second preferred embodiment with the embedded device and a camera chipset module.
- Fig. 3: is a schematic block diagram of a distributed object detection system according to another preferred embodiment of the present invention.
- Fig. 4: is another schematic block diagram of a distributed object detection system according to another preferred embodiment of the present invention, compared to the one shown in Fig.3.
- Fig. 5: is a schematic figure of an embodiment with beacons.
- Fig. 6: is an interaction diagram showing a data exchange between the electronic entities, in particular the camera, the app and a server according to a still further preferred embodiment of the present invention.
- Fig. 7: is a flow chart of a method for object detection according to an embodiment of the present invention.
- Fig. 8: is another example embodiment of the basket with mobile device to be attached.
- Fig. 9: is schematic figure representing main states for the object detection algorithm according to a preferred embodiment of the invention.

### DETAILED DESCRIPTION

The present invention relates to an approach for executing object detection in a fully autonomous manner. The invention may be used for a cash-desk-less payment system.

The solution presented herein addresses the problem of fast, autonomous product recognition around the shopping container or basket itself. For object detection an object detection algorithm ODA is used, which is based on and which applies deep learning (DL) models concerning the use of temporal aspects of the underlying video data and even more importantly the applied strategies to shrink and quantize the used models. The solution combines computer vision and DL applications with data privacy. Several DL models are distributed and aggregated over multiple embedded systems, which are hardware restricted. The object detection algorithm ODA is provided by means of a (simple) application (app), which may be installed during a registration procedure on a user's (shopper's) mobile phone. The download data for deployment of the DL models of the app amount in the range from below 1 MB up to 10 MB and takes not more than a few seconds depending on the network bandwidth. The ODA is a multi-staged tracking algorithm that uses results from different Deep Learning models. In particular, the invention makes use of an object detection and tracking model, a re-identification, a change detection, a movement direction classification and likely an item classification and/or segmentation network. The models will mainly use separate feature pyramids as fundamentally different features are required for the different tasks. For corresponding detection tasks, in the networks, however, also shared feature pyramids are possible.

To respond to the challenging breadth of possible interactions between the app and the user an innovative state machine architecture has been developed that allows for a clear mapping of all possibly arising real-world situations to dedicated internal states of the app.

In general, an innovative and technically highly efficient way is provided to solve the autonomous and cash-desk-less shopping while still providing data privacy for the shopper and fraud protection for the retailer on the same time. By limiting the problem to the interactions of the shopper with the shopping container (shopping cart, trolley or basket) the necessary message exchange is reduced significantly. By running the Al-based video analysis (for theft and fraud detection) on-device (as opposed to backend cloud server) a highly increased data privacy protection is ensured. By using the customer's own smartphone as embedded device and as a major hardware component of the solution cost and technical complexity for the retailer as well as profit naturally from increasing hardware capabilities on the average smartphone in the market is reduced.

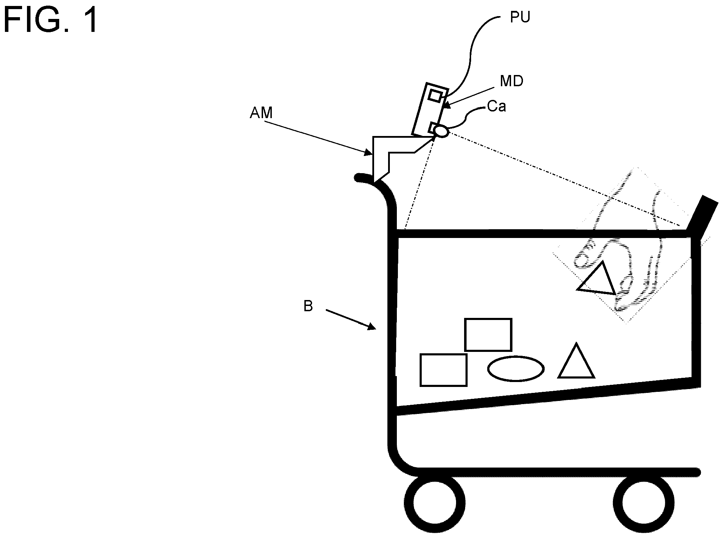

**Fig. 1** shows a shopping basket structure B, which is intended that many different shopping products or items may be put inside to be purchased. The basket structure B may be of different material (metal and/or plastic) and may have different breadth, width and height and construction forms. The basket structure B may be a shopping trolley or cart in different forms. The basket structure is movable and comprises attachment means AM for detachable attachment of an embedded device, in particular a mobile device MD, like e.g. a smartphone of the user. In the following description the term "mobile device" is used by way of example for a type of embedded device, like a smartphone or tablet or the like. The mobile device MD is equipped with a camera Ca for acquiring image data and in particular a video stream of the inside of the basket structure B, which is represented in Fig. 1 with the dot-dashed line. Preferably, the attachment means AM with the mounted camera Ca and mobile device MD are mounted at the front side of the basket B where the handle is. The technical effect of positioning the attachment at this place is that the mobile device MD is mounted in such a way that the customer is looking at the phone's display while pushing the basket B around.

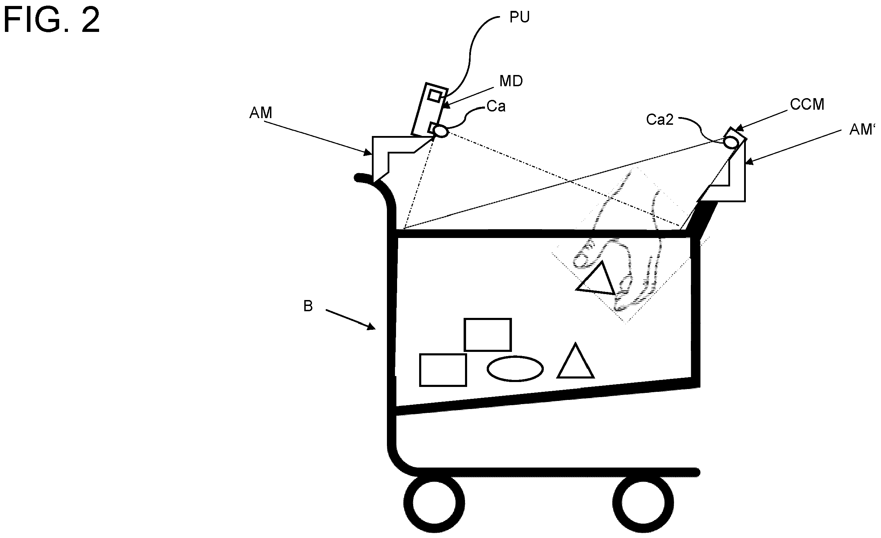

The attachment means AM may be made from metal and/or plastic material and may be permanently attached to the basket B. The attachment means AM serve to support a mobile device MD so that different and all major types of mobile devices MD may be supported. When attaching the mobile device MD to the attachment means AM, a mechanical connection is provided so that the mobile device is securely fastened within the attachment means AM serving as support structure (and e.g. is refrained from falling out). Further, a logical connection is provided to allow message exchange between the mobile device MD with the app and another local processing unit, which may be configured within a camera chipset module CCM (which will be explained in more detail below with respect to Fig. 2). Also, signal exchange may be provided so that e.g. an alert may be issued in case the mobile device MD is taken off the attachment means AM during the course of shopping and before payment procedure has started in order to indicate possible fraud. The attachment means AM will position the mobile device MD in such a way that a display of the mobile device MD is easily viewable by the user when pushing/ carrying the shopping basket structure B. Further, the positioning is arranged so that the camera of the mobile device MD can overlook the entire shopping basket structure B. To prevent the removal of the mobile device MD by a person other than the user (in case of misuse), in a preferred embodiment, the holder can be equipped with a passive (e.g. NFC tag) or active (e.g. short-range Bluetooth beacon) short range signal emitter. The app on the mobile device MD will ensure a signal with this emitter is kept throughout the shopping trip and will activate an alarm if the mobile device MD is removed from the attachment means AM without entering the mechanism to unlock the screen (e.g. PIN, pattern or fingerprint). In another preferred embodiment, the attachment means AM may include an attachable/ detachable battery module that can be used to charge the mobile device MD of the user. The attachment means AM can be fixed to the shopping basket structure B at a handle thereof or at the container structure itself.

For being able to participate in the cash-desk-less payment system, a user has to register at a backend server SV for being able to use the object detection system. After successful registration of the user and before starting a shopping trip, several deep learning models are transferred from a central server SV to the mobile device MD, which are then executed locally on the mobile device without any further communication with the central server SV.

This embodiment may relate to a version of the object detection system, wherein only the at least one camera Ca of the mobile device MD of the user is used for object detection and tracking. No other cameras are used besides the at least one camera Ca of the mobile device. This embodiment may be used in a full and in a light version.

In the light version, object detection is based on
1. the video stream of the camera Ca and by using the ODA with the different models and
2. by using a scanning application for scanning a barcode or QR code or another optical code, which is provided on each shopping item and identifies the same. Each product or item which is put in the basket B is to be scanned by using the camera Ca of the mobile device. The detected barcode may later be used for item detection, for determination of item-related meta data (e.g. the price) and/or for verification of object detection by means of ODA (see point 1. above).

In the full version, object detection is solely and to 100% based on the video stream, received by the camera Ca of the mobile device MD and by means of the deep learning models, which are loaded on the mobile device MD and are executed locally. In the full version it is not necessary to scan a code of the product.

**Fig. 2** shows another embodiment of the invention, which reflects another setting. Here, an additional camera-chipset module CCM is provided which is attached to the basket structure B in a permanent manner. The camera chipset module CCM may be deployed as system on chip and comprises a second camera Ca2 (in addition to the one of the mobile device MD) and an additional processor PU2 and related processing resources (memory, interfaces,...). The processing resources, in particular the processor PU2 is configured to receive the video data form the camera Ca2 and may be configured to access a storage for executing at least one deep learning model fully or in part. The camera-chipset module CCM may be permanently attached to the basket structure B by means of additional attachment means AM'. As depicted in Fig. 2, the camera-chipset module CCM preferably is attached or mounted at the opposite side of the basket B as the mobile device MD is. In this way, the camera-chipset module CCM may also acquire a video stream of the inside of the basket B. The second camera Ca2 may take the video stream from another viewpoint and/or angle as represented in Fig. 2 with dotted lines.

In case of using the camera-chipset module CCM, an additional processing capacity is provided by means of the additional processing unit PU2. Therefore, the tasks and procedures for executing the ODA algorithm with running the DL models may be distributed between at least two local processing entities PU, PU2 for improving performance.

As already explain with respect to Fig. 1, also the object detection system of Fig. 2 may be used in a full and in a light version.

In this embodiment, the system or infrastructure comprises three main components, which are:
i. the camera chipset module CCM with embedded device/FPGA with second (or additional) processing unit PU2 and with attached second camera Ca2,
ii. the user's mobile phone MD and
iii. the backend server SV.

The backend server SV provides current product information (price, name, possibly thumbnail image), potentially handles payment processes and collects statistics as well as provides the latest machine learning models for the respective store. These models are automatically deployed on the mobile device MD and/or camera chipset module (embedded device). The embedded or edge device/FPGA preprocesses the video stream coming from the connected camera, feeds it to one or multiple deployed models and sends their (intermediate) results to the app running on the mobile device MD. The app on the mobile device MD then aggregates these intermediate results with further results obtained from models running on the mobile device MD itself, which analyze the phone's camera input. Additionally, the mobile device MD of course provides the user interface and communication channel to the customer via the app.

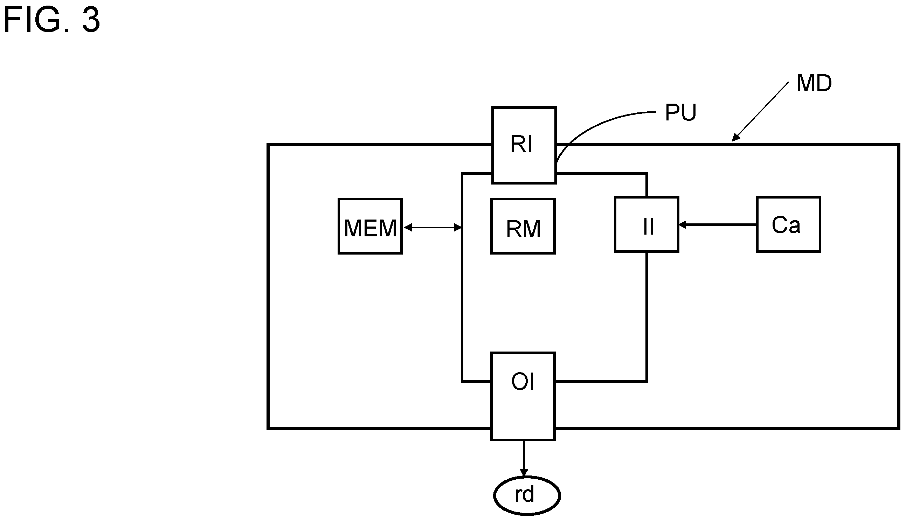

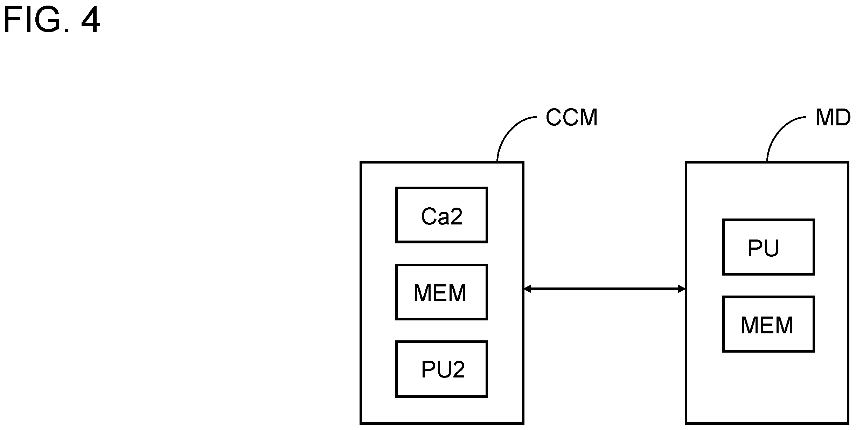

Fig. 3 shows a processing unit PU in a simplified manner (usually, other modules, like memory drives, interfaces etc. will be provided, too, but these modules are not shown in Fig. 3 for better understanding). The processing unit PU may be deployed in a mobile device MD and/or on another electronic instance, locally attached to the basket structure B. In one embodiment, the structure depicted in Fig. 4 may be or may be part of the mobile device MD. The processing unit PU may receive data of the camera Ca via an input interface II. Typically, the mobile device MD may comprise of at least one camera Ca for receiving video data. The attachment means AM, shown in Fig. 1 and 2, are configured such as the camera Ca of the mobile device MD is directed to the inner volume of the basket structure B in order to have a full view and to detect all changes with respect to the inside of the shopping basket B.

The processing unit PU comprises a registration unit RM for executing or initiating the registration procedure on the side of the mobile device MD (client side); whereas a server side of the registration procedure may be executed on a server SV. The backend administration server SV is responsible for providing the actual version of the DL models to the mobile device via the registration interface RI after successful registration of the client. It has to be noted that the server SV is actually not involved in object detection. No model execution is performed on the server SV, because the ODA is executed locally on the client. Thus, it is the processing unit PU of the mobile device MD or another entity at the basket B (e.g. the camera chipset module CCM, described in more detail with reference to Fig. 4 below) which executes object detection. After finalizing object detection, a result dataset rd with a list of detected objects is provided on an output interface OI to a retailer' server and/or to the backend server SV. As depicted in Fig. 3, the entity on which the processing unit PU is deployed (e.g. the mobile device MD and/or the camera chipset module CCM) may still comprise additional modules, like at least one memory MEM.

**Fig. 4** shows another embodiment, where a camera chipset module CCM is provided. The camera chipset module CCM is an electronic embedded instance and comprises at least one camera Ca2 and a processing unit PU2 for data processing. In particular, a video stream of the inside of the basket B is acquired and may be processed for object detection by means of at least a part of the DL models. This embodiment relates to the side view of the basket B of Fig. 2 with the camera chipset module CCM. As can be seen, the mobile device MD and the camera chipset module CCM are in data connection. This connection may be wired during the course of shopping or during a time interval, during which the mobile device MD is attached to the basket structure B. However, preferably the connection may be wireless, e.g. by using a protocol, in the radio frequency domain like Bluetooth, WLAN (IEEE 802.11), ZigBee, NFC, Wibree or WiMAX (IEEE 802.16) or a protocol in the optical frequency domain, like IrDA, Free-space optical communication/ FSO or others. On the camera chipset module CCM at least one additional camera Ca2 and at least one additional processing unit PU2 are provided. Preferably, an additional memory MEM is provided, too. The camera chipset module CCM may be attached to the basket structure B by means of the additional attachment means AM'. The additional attachment means serve to securely and permanently fasten or attach the camera chipset module CCM to the basket structure B. The data connection between the camera chipset module CCM and the mobile device MD may be secured by means of using compression algorithms for encryption and decryption. Preferably, an additional processor is provided on the camera chipset module CCM. The additional processor may serve to execute at least a part of the models, mentioned before, partially or completely and provide intermediate results or final results to the mobile device MD.

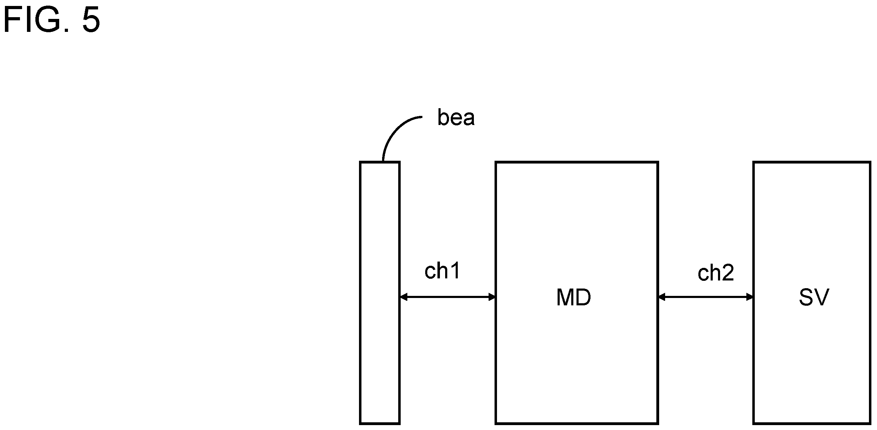

**Fig. 5** shows another embodiment, where beacons, e.g. Bluetooth beacons bea are provided in the shop which send a position signal to be received by the app on the mobile device MD. By receiving the signal, the app may calculate the position within the shop. This information may be used for validation and/or for triggering further actions. For example, if the beacon bea is positioned at the entrance, the signal may be used for validation of the trigger signal for starting the registration procedure or instead may serve as trigger signal. In case the beacon bea is provided at the cash desk, the signal may serve for triggering the payment procedure. In case the beacons bea are positioned in the shop, additional position information may be provided to the app, e.g. for guiding the user to the target positions of interest (according to prepared intended shopping list in the recommendation system). Preferably, the data communication channel ch1 (e.g. Bluetooth-based or NFC) between the mobile device MD and the beacons is different as the data communication channel ch2 (e.g. GSM, GPRS, UMTS, LTE or others) used for communication between the mobile device MD and the server SV.

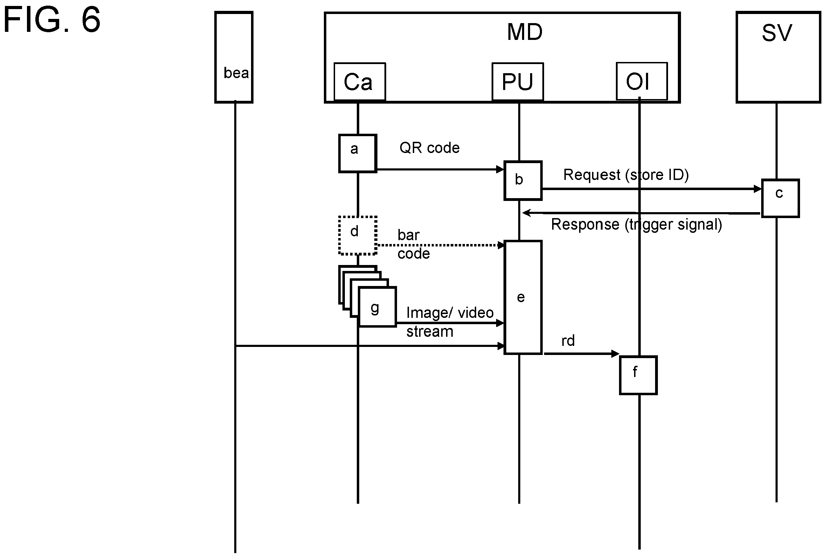

**Fig. 6** is an interaction diagram, representing the message exchange between the electronic modules according to a preferred embodiment of the invention. The camera Ca, preferably the at alt least one camera, which is integrated in the mobile device MD, interacts with the processing unit PU of the mobile device. The application for object detection has been installed on the processing unit PU in a preceding phase, after the registration procedure has been finalized. The registration procedure serves to register the mobile device MD and its user at an administration backend server. The administration backend server serves to provide the latest versions of the DL models. A part of the DL models is shop-specific (or retailer specific, because of the shop-specific products being offered) and some DL models are generic and may be applied for different shops. Therefore, the generic models may already be deployed on the mobile device MD at the end of the registration procedure, whereas the shop-specific model are downloaded and stored in the mobile device MD at the beginning of a shopping trip, e.g. at the entrance. This may be achieved technically, by reading in a code, e.g. scanning a QR code provided e.g. at the entrance of the shop by means of the camera Ca. This is represented in Fig. 6 with the reference numeral a.

In reply to that the processing unit PU may generate a request in step b and send a request message to the backend administration server SV (also shortly called server SV). The request message comprises a store identification storeID.

Upon receiving the request message on the server SV, the server creates a shopping basket container in a database and returns a storeName, a list of products and the links (e.g. URL links) to the shop-specific DL models and a shopping basket ID to the app in step c. So, after processing the scanned QR code the downloading of the shop specific DL models will be initiated automatically.

As depicted in FIG. 6, after that, the ODA algorithm may be executed locally on the processing unit of the mobile device MD by means of using the video stream, provided by the at least one camera Ca in step e.

The camera Ca detects raw image data. The camera Ca may optionally be used for scanning codes, like a QR code and barcodes of products which are put in the basket B. Here, the camera Ca is used as a scanner for scanning. As this is optional, this is depicted in Fig. 6 in dotted lines for step d. The scanned codes are provided to the processing unit PU for object detection.

The camera Ca is however, mainly, used for providing a video stream or continuous image data from the inside of the basket in step g - so that all products put into and taken from the basket B are detected - and transmits these images in an ongoing manner to the processing unit PU, PU2 for object identification by means of the app to be executed on the raw camera data. This video stream is continuously provided to the app on the processing unit PU, PU2. The raw data is detected over a time period, which is represented in FIG. 6 in step g and transmitted to the processing unit PU, PU2 for executing the DL models in step e. Thus, step e refers to execution of the ODA algorithm.

After that, a result dataset rd is provided on the output interface OI in step f and may be provided to external units, e.g. the server SV. The result dataset rd does not contain any image or video data and preferably comprises a list of detected items (shopping products). Thus, the result dataset rd is much more compressed and smaller in size, compared to image formats. The result dataset rd of a typical shopping trip should be in the kilobyte (KB) range as it mainly consists of serialized message files such as JSON, encoding numerical and textual results. This has major advantages from a message transfer and data exchange perspective.

As mentioned earlier, the method may be provided in a light version and may contain a step of barcode scanning of the items in the basket structure B (also shortly called basket B).

This is, however, optional. The barcode scanning is not used for object detection. Object detection is executed by means of applying the ODA algorithm based on different -in particular four - DL models.

If a barcode is scanned, the app synchronizes the content of the basket to the server SV (whenever a data connection is available) so that the content of the basket B is actually and permanently updated and kept transparent over time. A supervision algorithm may be applied in this respect. The app detects(s) any inconsistencies or differences in between the state (loading state) of the basket B and the virtual shopping basket, i.e. the items whose barcode was scanned. So, whenever the user adds an item to the basket B without scanning the same, this is automatically detected by means of using the object detection and tracking model and potentially the change detection model. The app will issue a correction request message on the UI of the mobile device MD and the user has the option to correct his or her mistake. The error correction is facilitated by the re-identification model which ensures that the correct item is re-scanned. If the mistake is not corrected, the app will urge the user finish the shopping trip by traditional means (e. g. by going to a staffed cash desk).

The user may re-arrange (re-sort) the products in the basket B without adding new items. Thus, the objects in the basket B are positioned differently. In this case there is no need for a corresponding barcode scan by the user. The reordering is automatically identified by using the object detection and tracking model and the movement direction model. The re-identification and change detection models are employed to provide additional consistency checks.

If the ODA detects that a new item was added to the basket B or an item was removed, this will automatically lead to generating a message to the server SV for tracking any changes in the basket B and for persisting the actual state of the basket B in the database. In case there is no data connection available the app will synchronize at the next item addition or removal when a data connection is available. However, another embodiment relates to the situation where no network access is available inside the shop. In this case, it may also be possible, that during the shopping trip no message exchange between the mobile device MD and the server SV is performed (e.g. because no network access is possible) in that the messages may be spooled or aggregated and prepared to be sent in one packet at the end of the shopping trip when network access is available again.

After the user has ended his or her shopping, he or she may proceed to a payment procedure, which according to the invention is cash-desk-less. For initiating the payment procedure, a payment trigger signal may be provided to the app (issued from the mobile device MD or from the server SV). In reply to this, the payment procedure will be initiated. The app generates a payment identifier, which represents the list of products, the user wants to pay (present in the basket B). The payment identifier may be provided on the UI of the mobile device MD to the user for validation. Upon validation (e.g. by means of providing a validation signal), the payment identifier is transmitted to a retailer's server (PoS, point of sale) for generating price calculation items for the items to be purchased and for execution of the usual payment procedure.

The payment procedure may be performed by paying at the PoS or cash-desk, based on the generated price calculation items, which may be transformed by the app into a code, e.g. a QR code, which may be presented on the UI of the mobile device MD. The QR code may be scanned by the cash-desk and the items may be persisted in database of the shop. Alternatively, the virtual shopping list on the app may be transmitted via low-energy Bluetooth to the PoS.

Alternatively, the payment procedure may be performed by paying via the app by means of using a payment provider (e.g. PayPal etc.). The generated price calculation item will be provided to the payment provider. The state (shopping ongoing or completed or aborted) is persisted on all entities involved (processing unit PU, server SV and retailer's server or database).

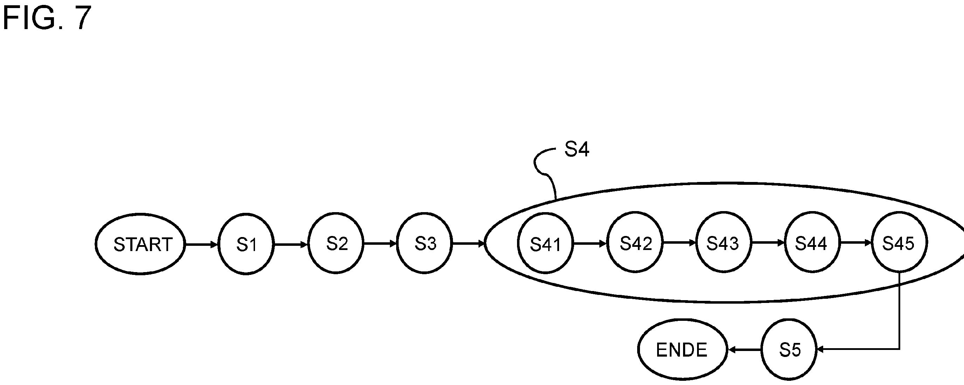

**Fig. 7** shows a flow chart of the object detection method according to several embodiments. After start of the method, in step S1 the mobile device MD is registered. Registering means that a user decides to take part in the cash-desk-less shopping system and registers at the backend administration server SV as an app user. The registration has the effect that the user's mobile device MD is allowed to receive the DL models for object detection or updates thereof and to take part in the server-based payment procedure as described above. User account data, and optionally banking data may be exchanged. A user profile is generated for the user on the server SV.

In step S2 a trigger signal is received, which indicates that the user is prepared to start a shopping trip in a specific shop, which is only allowed after successful registration. The trigger signal may be provided as QR code scanning or simply by detecting that the mobile device MD is attached to the basket structure B. This can be detected by means of different kinds of sensors (e.g. contact sensors).

In step S3 the mobile device MD is physically attached to and at the basket structure B and logically connected so that the app deployed on the processing unit PU is in data connection to an optionally provided camera chipset module CCM and to external instances, like the server SV.

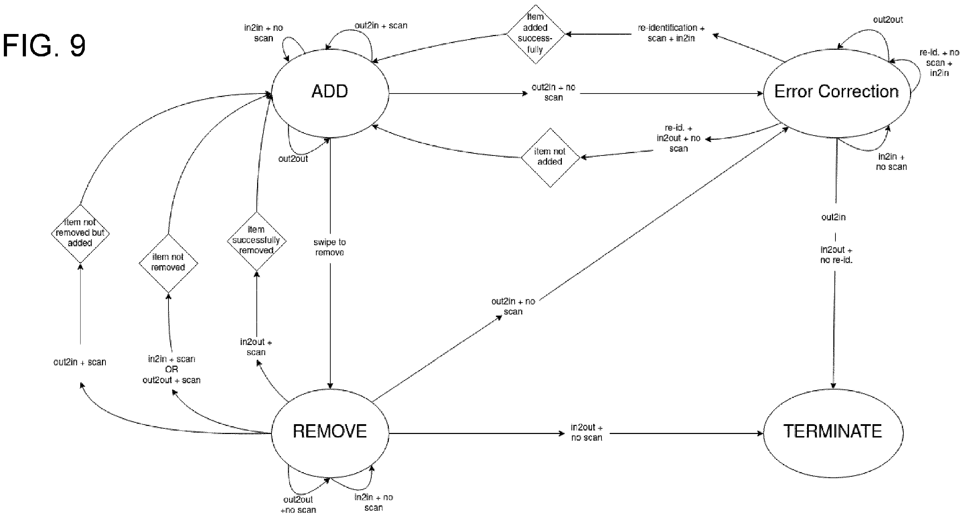

In step S4 the object detection algorithm is executed. This comprises the steps of:
- accessing a first storage on the embedded device MD for locally executing a trained object detection and tracking model based on the received video stream in step S42 and
- accessing a second storage on the embedded device MD for locally executing a trained re-identification model in step S 43 and
- accessing a third storage on the embedded device MD for locally executing a change detection model in step S44,
- accessing a fourth storage on the embedded device MD for locally executing a movement direction classification model. The movement direction classification model classifies a movement direction in at least four classes, IN-to-OUT, OUT-to-IN, IN-to-IN and OUT-to-OUT representing that items are put into the basket B or taken out of it, re-ordered inside the basket or presented to the camera but immediately returned to the shelves. This feature is motivated by the fact that it is important to understand the different kinds of actions a user is taking. We need a clear understanding of movement direction, or more specifically we need to reliably classify if a track started/ ended inside or outside the shopping basket. The significance of this is also evident from looking at a state machine architecture, which will be explained below in more detail with respect to Fig. 9. To classify the start/ end region of a track we use a cascade of model predictions and decision rules described as followed: An inside-vs-outside mask produced by a segmentation model is used to assess to what degree the first/ last item detections are overlapping with the outside vs. inside of the basket/ cart. This overlap ratio provides one cue to the start/ end region of a track. If the first/ last detection of a track touches the image boundary is providing another cue to the start/ end region.

Another strong cue comes from the (typical but not guaranteed) temporal relationship between the item track and the track(s) of the hand(s) moving the item and the additional attributes predicted for the hand ("full" vs. "empty"):
OUT-to-IN event would typically have the following temporal sequence: 1) an "item" track starts; 2) shortly after a "full hand" track starts 3) the "item" track ends; 4) almost directly after the "hand" track changes its attribute to "empty"; 5) a bit afterwards the "empty hand" track ends
IN-to-OUT event would typically have this sequence: 1) an "empty hand" track starts; 2) a few iterations later an "item" track starts and the "hand" track changes its attribute to "full"; 3) the "full hand" track ends and shortly after the "item" track;
IN-to-IN event would typically have this sequence: 1) an "empty hand" track starts; 2) a few iterations later an "item" track starts and the "hand" track changes its attribute to "full"; 3) the "item" track ends and the "hand" track changes its state to "empty"; 4) the "empty hand" track ends;
OUT-to-OUT event would typically have this sequence: 1) an "item" track starts; 2) shortly after a "full hand" track starts; 3) the "full hand" and "item" track end in very close succession with the "full hand" track typically ending shortly before the "item" track.

DL model predictions are also deployed on the movement direction and start/ end region of a track as additional cues to the track start/ end region classification, such as direction of movement of hand and item, predicting positions in the subsequent time steps of hand and item, comparing change detection results with the detection results at the beginning and end of each track (e. g. an OUT-to-OUT track should not result in any changes in the scene, and IN-to-IN track should typically result in at least two distinct changes, etc.)

Optionally, an additional start-end region classification model is run on first/ last few frames and predicted detections of the respective track.

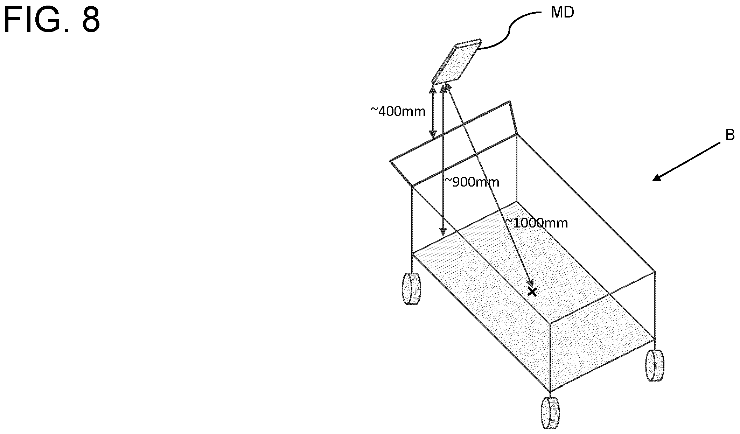

**Fig. 8** shows another constructional example of the basket B which is configured with attachment means AM (not shown) to attach the mobile device MD. As indicated in Fig. 8, the distance between attachment of the mobile device MD and a base or bottom structure of the basket B is in the area of 900mm and the detection distance to the items in the basket B are in the field of 500mm to 1500mm, depending of the size of the basket B.

**Fig. 9** indicates the main states of the app in the embodiment with the scanning functionality (light version as described above with respect to Fig. 1). As can be seen, four main states are configured:
1. Add item to basket
2. Remove item from basket,
3. Error state and
4. Terminate state.

For the purpose of simplification, the different event types, as mentioned above, e.g. "In-to-In" are represented in Fig. 9 as "In-2-In" and the others respectively. The first and second state need no further explanations. The error state relates to the event, where a user has put a product inside without scanning the same and the terminate state refers to events where the app execution is terminated or ended, e.g. if the user does not correct his mistakes. The state transmissions in Fig. 9 are self-explanatory. Re-id or re-identification refers to the fact that an item is re-identified which has been identified before, this may be the case when re-arranging items in the basket B or when taking one item out and putting it back again. Mistakes or errors may occur if the user puts an item in the basket B without scanning the same and without correcting his mistake be later scanning.

Generally, the solution described herein, works with video data and aims to track object movement in a systematic way, we deal with temporally correlated data. There are multiple techniques available in the state of the art of Deep Learning, most noticeably recurrent neural networks (LSTMs being the prime example) and attention modules. Standard LSTMs are however, not quantizable yet and would also likely be to computation heavy to run in real-time under the limited hardware setting that we need to work with. That's why we designed a simple extension of our object detection method which predicts not only the location of object centroids in a given frame but also their movement direction for the next time step. This allows for a highly efficient and simple tracking algorithm where the object centroids in the following frame can be matched to the ones in the previous frame in a greedy fashion based on the predicted offsets. The predictions of the method are based on the previous and current frame together with the location of all objects in the previous frame. This approach can be easily extended to multiple input frames or feature representations from multiple feature extractors for the required input frames to allow for longer range temporal information and multiple or differing types of features computed for a frame.

Many experiments and research have been spent to determine the best selection of objects to detect and track, in particular which objects to track and which additional attributes to classify per object to strike the right balance of not overburdening the DL models with too much complexity (which would degrade performance) but still gathering enough information and understanding to cope with almost all possible situations that can possibly arise in the use-case it is to be solved. The three main object categories that we detect, and track are:
a. Item (any type of shopping article or product, placed into the shopping basket or container)
b. Hand (belonging to the person interacting with shopping cart or basket)
c. Binary 2d code (i.e. barcode or QR code).

The "item" class is of core interest as our solution is meant to always keep track of whether any items are being placed into our removed out of the shopping basket. In combination with the "Binary Code" class we can understand if an item's barcode has been scanned or not and can also make sure that no item is being scanned more than once even if there are multiple barcodes displayed on the same item.

The "Hand" class serves as an important indicator to more confidently understand and predict the actions taking place in the field of view of the camera, as the movements of hands and items are typically strongly correlated. E.g. an item being removed would typically correlate to an empty hand reaching into the basket followed by a full hand moving out of the basket. For each of these three classes we train our models to predict a variety of additional attributes. We use these attributes to make our DL models more resilient and in order to perform additional consistency checks. We can for example detect if someone is holding a cheaper (small) item in front of the barcode of a more expensive one, by comparing the expected "Shape", "Material" and "Product Category" attributes that match the barcode scanned with the attributes values that we actually detect in the image.

### Item:

∘ Material: "Material" refers to the outermost material (so, essentially the material of the packaging). If the item or its packaging consist of multiple materials, the dominant one covering the largest area is selected
   □ - Plastic see-through
   □ - Plastic opaque
   □ - Cardboard
   □ - Paper
   □ - Metal
   □ - Glass
   □ - Organic
   □ - Wood
   □ - Cloth
   □ - Ceramic
   □ - Rubber
   □ - Tetrapak-like
   □ - Other
∘ Shape:
   □ - Cylindrical
   □ - Cylindrical Large
   □ - Deformable
   □ - Deformable Large
   □ - Rectangle
   □ - Rectangle Large
   □ - Spherical/Ellipsoid
   □ - Spherical/Ellipsoid Large
   □ - Cuboid
   □ - Cuboid Large
   □ - Other
∘ Product Category:
   □ - Household
   □ - Edibles
   □ - Body Hygiene/cosmetics
   □ - Reading/Print media
   □ - digital/electronics
   □ - Drinkables
   □ - Other

### Hand:

∘ Hand requires class information about *its body side*
   iv. Left
   v. Right

   b. Hand requires class information about *its state*
      i. Empty
      ii. Full/Grasping item
   c. Hand requires information about *its movement*
      i. Moving into the shopping basket
      ii. Moving out of the shopping basket
      iii. Reordering/Sorting items

### Binary Code:

Binary code may be attached to a product and may in a certain embodiment but not mandatory be used for processing. The binary code requires class information about *its visibility*
- Full/completely readable
- Partial/too blurry to read

∘ Binary code requires class information about *its type*
   • *Barcode*
   • *QR code.*

One important aspect of the invention relates to using features extracted by a DL model to re-identify products in order to allow a shopper to correct the mistake of putting an item into the shopping basket without scanning it. For this, we need to be able to reliably re-identify the respective item that was put into the basket without a proper barcode scan. Technically this means, we need to be able to visually tell shopping articles apart with high accuracy. We achieve this via a dedicated DL model that takes the image crop around the item in each frame (as detected by the ROI extractor model/ object detector) as input and produces from it a visual descriptor that we aggregate of time steps. We do this for every item we track in the field of view of the camera. To re-identify an item, we now compare the visual descriptor of the item currently in the field of view to the visual descriptors of all items we have seen so far and, in the case of a necessary re-scan following the addition of an item without scan, specifically to the visual descriptor of the item that was added to the basket but not scanned. Using visual descriptors to assess visual object similarity is an old technique in the field of Computer Vision. However, traditional descriptors, such as ORB, SIFT, SURF (see e.g. https://arxiv.org/pdf/1710.02726.pdf) are not nearly powerful and reliable enough for the task we need to solve. For this reason, we use a neural network with an efficient architecture to extract a feature descriptor in a data-driven way. We train this DL model on a dedicated dataset specifically tailored for the task of noticing differences in visual appearance between different objects, invariant of their pose, viewing angle, lighting conditions, etc. This dataset we compiled ourselves and tailored it to achieve optimal results. This was achieved starting with the recording of both very similar and dissimilar items as well as recording each item at least two times against different backgrounds and with different hands and movements. For training and evaluation, this dataset is randomly split into representative test, validation and training data and augmented to cover a large variety of geometric and spatial perturbations to achieve the invariance mentioned above. We also use the features generated by this DL model in our tracking algorithm and in other parts of our application in innovative ways.

Another aspect relates to Cutting Edge Quantization of the DL models. Quantizing DL models allow to shrink memory footprint (typically by a factor of four) and execution speed, making it an essential step when running DL models on embedded or edge devices with limited hardware resources. This field is still very new and the available support for DL model quantization is still limited, making it necessary to customize the application of the limited quantization toolkit to our needs. To facilitate quantization and achieve minimal loss in accuracy our models rely on well quantizable 2D convolutions and ReLU activation functions. While easily quantizable, these functions have the undesirable property of being unbounded. Hence, we in fact train our models with the Relu6 function which is bounded from above and below. To increase numerical stability, we additionally merge convolutional weights with preceding batch norm weights and/or ReLU activation functions. We then collect statistics about the typical value ranges of activations on a representative data set and use this information to convert weights intermediate results in the computational graph of the model to an 8-bit integer representation. This reduces the model size by a factor of 4 while resulting in a speed up of typically an order of magnitude.

Another aspect relates to Global Change Detection. There will be cases for which also our efficient and reliable object tracking will fail (e.g. very fast or (partially) occluded movements). Still, we have to ensure that no change to the overall state of the contents of the physical shopping cart or basket goes unnoticed by our system. For this purpose, we apply yet another DL model that is trained to detect any visual changes occurring on the inside of the shopping basket. Our application then compares these detected changes with the results of our detection and tracking algorithm to see if all detected changes can be explained by the properly tracked objects. In case of inconsistencies between the two our application can react accordingly (e.g. by reducing the overall confidence score of the shopping trip). Our change detection DL model is applied mainly to the entire camera view, however only changes detected inside the physical basket are processed further by the application. To differentiate between the inside and outside of the physical basket we apply yet another deep learning model.

Therefore, in a preferred embodiment, the ODA makes use of a specific model. The specific model consists of a fully convolutional feature pyramid architecture to whose highest-resolution layer a simple head network is applied that predicts for each pixel in the input image pair its proximity to the center of a change in between these two frames. This results in a change heatmap of dimensions equal to the input frames. To train the model, we select pairs of only minimally or not at all occluded images from our annotated video tracks and then accumulate the annotations of all items placed in or removed from the shopping basket to obtain an overall target representing to total change in the basket. The model is then tasked with predicting the total change between the two selected images as given by the target heatmap.

In a preferred embodiment, Basket Boundary segmentation is used. This serves to distinguish between inside and outside of the basket B. Knowing which pixels in the incoming camera frames belong to the inside vs. outside of the shopping basket is valuable information for many features of our application. As we will have to work with different smartphone models whose cameras will have different opening angles, positions, etc. we need a way to automatically detect the outline of the shopping basket in the image. It is preferred, to do this only once at the beginning of the shopping trip as the geometrical relation between the phone's camera and the basket should not change throughout the shopping trip. To recognize the outline of the shopping basket we train a simple and very lightweight semantic segmentation model that classifies all pixels in the field of view of the camera as belonging either to the inside or outside of the shopping basket. We use this information, e.g. to determine if an "item" or "hand" track starts/ ends inside or outside the basket, which is a very important information for state transition rules in our state machine architecture.

In a preferred embodiment, several incoming frames of the camera can be queued, and the object detection and tracking can be run on multiple frames in a single forward pass through the respective DL-models. This ensures that the models are able process all incoming frames at the full available 30 frames per second (fps) to 60 fps. Not skipping too many frames is critical to ensure that also fast movements do not remain undetected. In more detail: the object detection and tracking model generates a certain latency in the execution and thus limits the frequency of the executions. This frequency can be below 30 frames per second, for example, and thus below the recording speed of a typical smartphone camera. Therefore, in such a case not all images captured by the camera can be processed by the model and have to be "dropped". However, this of course also means that information is lost and in extreme cases it can happen that very fast movements cannot be detected by the model because the entire movement took place within a prediction cycle of the model. Therefore, in a preferred embodiment, the prediction cycle of the model (inference execution time) is monitored and automatically compared to the recording speed (resolution in time) of the camera. Preferably, a warning message may be issued in case it is determined that the prediction cycle of the models (execution time of the object detection algorithm ODA) is lower than the recording speed of the camera, because of the risk that very fast movements cannot be detected in a safe manner.

In another preferred embodiment, the app on the mobile device MD has implemented a hardware verification function. The hardware verification function determines or reads-in the hardware capabilities of the mobile device and compares it with the required resources for executing the app with the object detection algorithm ODA. In case the determined capabilities are not sufficient on in a threshold range, a warning message may be issued to inform the user accordingly.

Additionally, DL-models of different sizes (small to extremely small) are interleaved to ensure a good balance between processing speed and prediction quality. This balance can be adapted to the available hardware. In a preferred embodiment, the mobile devices MD hardware may be queried in the registration phase (e. g. by querying the phone model the app is running on). Upon receiving this information, the adaption of the ODA may be carried out for balancing the processing speed and quality.

In a preferred embodiment, a confidence score for the shopping trip is provided by the app. Thus, as an additional optional feature we provide a confidence score of the shopping trip and that depends on the user's behavior during the shopping trip and that gets continuously updated upon every action the user takes and our system's level of certainty about its predictions/ assessments. This confidence score can be for example used to determine which shopper should be the target of an additional visual check by a human staff member. Specifically, the confidence score is based on factors such as:
- the speed of movement by the customer (e. g. throwing an item into the basket will yield a lower score than calmly placing it inside with a hand)
- the number of items manipulated at once (e. g. adding multiple items at once will typically yield a lower score than handling items sequentially)
- occlusion events; if the customer occludes the cameras field of view to a large degree for a long time (>2 seconds) will yield a lower score
- any behaviors that can be interpreted as trying to cheat the system will reduce confidence (e. g. triggering a remove item event, scanning it but then placing the item back into the cart instead of physically removing it)
- Any change detections that do not match with the detected tracks will lower the confidence.
- Also, each track has its own confidence score assigned to it which depends on our systems confidence in generating the track from the individual object detections.

Another important aspect of the system described herein is the distribution of the application and specifically its DL models over multiple hardware components (embedded devices, like smartphone and camera chipset module CCM) in a preferred embodiment of the invention. In the end version of the application (that provides fully image-based classification of all products added to the basket without the need of scanning a barcode) we will have an additional embedded camera device mounted on/ or integrated with the shopping basket. This embedded camera will have its own DL accelerator chip. As we still use the user's own smartphone as the centerpiece of our solution and the interface to the user, we designed a way to efficiently combine the available hardware resources as well as fields of view of the different cameras that maximizes their respective usefulness. For energy consumption reasons interim results of the programs running on the embedded camera and the smartphone respectively need to be exchanged via low-energy Bluetooth, limiting the possible size of the data packages that can be exchanged.

Because of this, we will deploy independent DL models on both the smartphone and the DL accelerator. These models perform the entire predictive task, for instance predicting bounding boxes together with their center points on the respective device. This has the advantage that only final prediction results like coordinates need to be sent from the DL accelerator to the smartphone instead of much larger intermediate results in the form of high-dimensional tensors. In addition to that, this deployment strategy allows for fully tuning the models to the respective hardware and camera perspective (the smartphone camera will look at the basket from a drastically different perspective than the camera attached to the embedded DL accelerator) by only training on data recorded for the respective setting and using tailored augmentation techniques with respect to spatial/geometric transformations, colors and lighting.

Especially for the case of the object detection and tracking, the combination of the results obtained from the model, deployed on the DL accelerator and the smartphone is not trivial as the coordinates refer to different perspectives on the basket and hence all detected objects. This necessitates an initial calibration which we automate by using one or multiple reference objects (for instance the first few items added by the customer) for whose detection results a possibly non-linear transformation is found that maximizes the overlap between the detections. It is important to note here that the detections obtained from the embedded camera feed will be transformed to match the perspective of the smartphone such that the detections based on the smartphone camera feed can be used from the start.

An important technical advantage is to be seen in the fact, that it is possible to run the application fully offline (during shopping trip). As described above, the application only needs internet connection at the entrance area of a store/ the beginning of a shopping trip, but not inside the store/ during the shopping trip. While some optional convenience features of our app (e.g. recommendation engine) will not work without internet connection inside the store, we specifically designed the core features of our solution that enable the user to scan products his- or herself during the shopping trip in a fraud-proof way, in a way that does not rely on a continuously available internet connection. We achieve this by running all our DL models fully embedded on the user's smartphone (and potentially an additional embedded camera chipset module CCM) and not on a server backend.

A further aspect is to be seen in the dynamic DL model deployment to e.g. smartphones and embedded cameras from the administration backend server SV. We might need to provide dedicated models to different retailers. As our app won't be able to store too many DL models at once without taking up too much storage space on the user's phone, we need a way to download the correct DL model to the phone when a user enters the store of a particular retailer and starts his/her shopping trip. To enable this, we implement a simple store identification mechanism (whose embodiment could be a simple QR code that the user scans with his phone upon arriving at the store). This (or a similar mechanism) triggers a call from our app to our backend. This will trigger the backend to:
- create a virtual shopping basket entity that the app will synchronize itself with (regularly, if a Wi-Fi or mobile data connection is available inside the store, or only at the end of the shopping trip, if not) to store all relevant information about the shopping trip (mainly the items that were being purchased, but also other data);
- Provide the app with the relevant DL models trained for the specific store. For this we implemented a dedicated DL model staging and provisioning pipeline.
- Provide the app with a mapping of the specific store's product list (i.e. a mapping between Global Trade Item Number (GTIN), product names, (current) prices and further details, e.g. promotions or thumbnail images)

The attachment means AM may be provided for the embedded device, i.e. the user's mobile phone MD and in a modified form AM' for the optional camera chipset module CCM. The attachment means AM, AM' are preferably made of plastic material, like in particular thermoplastics or combined with metal as a hybrid structure. The attachment means AM, AM' are preferably undetachable fastened at the basket structure B. The attachment means AM serve for temporary engagement with the embedded device MD. The attachment means may further comprise sensor means for detecting if the embedded device MD is coupled to the attachment means AM. The signal may be transmitted wirelessly to the processing unit PU and may be processed by the app.

## Claims

1. Computer-implemented method for object detection based on computer vision by processing video data of at least one camera (Ca) by using at least one processing unit (PU) of an embedded device (MD), with the following steps:
- Providing a registration procedure for registering (S1) the embedded device (MD);
- Upon receiving (S2) a trigger signal on the processing unit (PU) of the embedded device (MD) in reply to a successful execution of the registration procedure:
- Connecting (S3) the embedded device (MD) to a basket structure (B) by means of attachment means (AM), wherein the connecting (S3) comprises establishing a data connection by means of providing data exchange between the embedded device (MD) and the basket structure (B) or components thereof;
- Executing (S4) an object detection algorithm (ODA) locally on the processing unit (PU) of the embedded device (MD) for automatically detecting objects in the basket structure (B) and providing (S5) a result dataset (rd), wherein executing (S4) the object detection algorithm comprises:
- Receiving a video stream (S41) of the at least one camera (Ca) during aggregation of objects in the basket structure (B) via an image input interface (II) of the processing unit (PU); and in parallel:
- Accessing (S42) a first storage on the embedded device (MD) for locally executing a trained deep learning object detection and tracking model based on the received video stream, wherein a downsampling algorithm is executed, which down-samples the received video stream before accessing the object detection and tracking model; and
- Accessing (S43) a second storage on the embedded device (MD) for locally executing a trained deep learning re-identification model and
- Accessing (S44) a third storage on the embedded device (MD) for locally executing a deep learning change detection model
- Accessing (S45) a fourth storage on the embedded device (MD) for locally executing a deep learning movement direction classification model, wherein the movement classification model is trained on video sequences of different people putting shopping articles into or out of a basket structure and predicts if a given track taking place in the video started or ended outside or inside the basket structure;
wherein executing the object detection algorithm (ODA) and in particular by executing the object detection and tracking model comprises classifying a movement direction in at least four classes, in particular in an IN-to-OUT, IN-to-IN, OUT-to-OUT and in an OUT-to-IN class, wherein IN-to-OUT represents that items are taken out of the basket structure, IN-to-IN represents that items are re-ordered inside the basket structure, OUT-to-OUT represents that items are presented to the camera but immediately returned to shelves, and OUT-to-IN represents that items are put into the basket structure;
wherein a reordering of objects within the basket structure (B) is automatically identified by using the object detection and tracking model and the movement direction classification model;
wherein the re-identification model and the change detection model are employed to provide additional consistency checks, wherein:
deep learning model predictions are deployed on the movement direction and start and end regions of a track as additional cues to classify the start and end regions of the track; and
changes detected by the change detection model are compared with results from the trained object detection and tracking model to see if all detected changes can be explained by properly tracked objects.

2. Method according to any of the preceding claims, wherein the result dataset (rd) is provided in a numerical or alphanumerical format and does not contain any image or video data.

3. Method according to any of the preceding claims, wherein the embedded device (MD) is equipped with a scanning application by using at least one camera (Ca) which is used for scanning an optical code, in particular a binary 2D code, attached to an item, for calculating a scan dataset for the respective item, which may serve as reference identification for the respective item for the object detection algorithm (ODA).

4. Method according to any of the preceding claims, wherein the processing unit (PU) is embedded in an integrated circuit board and/or wherein the processing unit (PU) may be part of an FPGA.

5. Method according to any of the preceding claims, wherein the object detection algorithm (ODA) is based on a bounding box or a similar approach such as centernet, and wherein the result dataset (rd) consists of a list of box coordinates together with classification scores and may optionally contain meta data, in particular meta data having a time stamp and/or wherein the result dataset (rd) does not contain image data of the received video stream.

6. Method according to any of the claims 1 to 5, wherein the object detection algorithm (ODA) is based on a heat map approach and wherein the result dataset (rd) consists of heatmaps of the detected objects, in particular in compressed form and/or wherein the result dataset (rd) does not contain image data of the received video stream.

7. Method according to any of the preceding claims, wherein the object detection and tracking model may comprise a first module which is a feature extraction module, which may comprise a feature pyramid extraction network for providing a feature pyramid in different image resolution levels.

8. Method according to the directly preceding claim, wherein the feature pyramid extraction network is a feed forward deep CNN and may comprise depth-wise separable convolutions.

9. Method according to any of the preceding claims, wherein the object detection and tracking model may comprise a second module with a head network, which is applied to all or a subset of the different levels of the provided feature pyramid in order to predict bounding boxes for objects to be detected.

10. Method according to any of the preceding claims, wherein the object detection and tracking model is configured to be executed on the embedded device (MD), being resource restricted, in that
- the object detection and tracking model is based on integer operations instead of floating point operations by using data-driven compression algorithms; and/or
- the object detection and tracking model is pruned.

11. A processing unit (PU), being provided in at least one embedded device (MD), which is configured to execute the method according to any one of the preceding method claims above and comprises:
- A registration module (RM) for executing a registration procedure;
- An input interface (II) to at least one camera (Ca) for receiving a video stream;
- wherein the processing unit (PU) is configured for executing the object detection algorithm (ODA);
- An output interface (OI) for providing the result dataset (rd).

12. The processing unit (PU) according to the directly preceding claim, wherein the processing unit (PU) has an interface to at least one external camera (Ca2), wherein the external camera (Ca2) may be integrated in the at least one embedded device and/or may be integrated in an external unit, in particular in a camera-chipset-module (CCM), being in data exchange with the processing unit (PU).

13. An automated distributed object detection system, configured to perform the method according to any one of the preceding method claims above, comprising:
- a processing unit (PU) which may be implemented on a mobile device (MD) and/or on at least one camera-chipset-module (CCM) and
- at least one camera (Ca, Ca2) with an interface to the processing unit (PU).

14. A computer program comprising a computer program code, the computer program code when executed by a processor causing a processing unit to perform the steps of the method of any of the preceding method claims.

## Patentansprüche

1. Computerimplementiertes Verfahren zur Objekterkennung auf Basis von Computervision durch Verarbeitung von Videodaten mindestens einer Kamera (Ca) unter Verwendung mindestens einer Verarbeitungseinheit (PU) eines eingebetteten Geräts (MD), mit den folgenden Schritten:
- Bereitstellung eines Registrierungsverfahrens für die Registrierung (S1) des eingebetteten Geräts (MD);
- Beim Empfang (S2) eines Auslösesignals an der Verarbeitungseinheit (PU) des eingebetteten Geräts (MD) als Antwort auf eine erfolgreiche Ausführung des Registrierungsverfahrens:
- Verbinden (S3) des eingebetteten Geräts (MD) mit einer Korbstruktur (B) mittels einer Befestigungseinrichtung (AM), wobei das Verbinden (S3) das Herstellen einer Datenverbindung durch Bereitstellen eines Datenaustauschs zwischen der eingebetteten Vorrichtung (MD) und der Korbstruktur (B) oder Komponenten davon umfasst;
- Ausführen (S4) eines Objekterkennungsalgorithmus (ODA) lokal auf der Verarbeitungseinheit (PU) des eingebetteten Geräts (MD) zum automatischen Erkennen von Objekten in der Korbstruktur (B) und Bereitstellen (S5) eines Ergebnisdatensatzes (rd), wobei das Ausführen (S4) des Objekterkennungsalgorithmus umfasst:
- Empfangen eines Videostroms (S41) der mindestens einen Kamera (Ca) während der Aggregation von Objekten in der Korbstruktur (B) über eine Bildeingangsschnittstelle (II) der Verarbeitungseinheit (PU); und parallel dazu:
- Zugreifen (S42) auf einen ersten Speicher auf dem eingebetteten Gerät (MD) zum lokalen Ausführen eines trainierten Deep-Learning-Objekterkennungs- und -verfolgungsmodells auf der Grundlage des empfangenen Videostroms, wobei ein Downsampling-Algorithmus ausgeführt wird, der den empfangenen Videostrom abtastet, bevor auf das Objekterkennungs- und -verfolgungsmodell zugegriffen wird; und
- Zugreifen (S43) auf einen zweiten Speicher auf dem eingebetteten Gerät (MD) zum lokalen Ausführen eines trainierten Deep-Learning-Wiedererkennungsmodells und
- Zugriff (S44) auf einen dritten Speicher auf dem eingebetteten Gerät (MD) zur lokalen Ausführung eines Deep-Learning-Modells zur Erkennung von Veränderungen;
- Zugreifen (S45) auf einen vierten Speicher auf dem eingebetteten Gerät (MD) zum lokalen Ausführen eines Deep-Learning-Bewegungsrichtungsklassifizierungsmodells, wobei das Bewegungsrichtungsklassifizierungsmodell auf Videosequenzen von verschiedenen Personen, die Einkaufsartikel in eine Korbstruktur einlegen oder daraus entnehmen, trainiert wird und vorhersagt, ob eine gegebene Bewegung, die in dem Video stattfindet, außerhalb oder innerhalb der Korbstruktur beginnt oder endet;
wobei die Ausführung des Objekterkennungsalgorithmus (ODA) und insbesondere die Ausführung des Objekterkennungs- und -verfolgungsmodells die Klassifizierung einer Bewegungsrichtung in mindestens vier Klassen umfasst, insbesondere in eine IN-to-OUT, IN-to-IN, OUT-to-OUT und in eine OUT-to-IN Klasse, wobei IN-to-OUT bedeutet, dass Artikel aus der Korbstruktur entnommen werden, IN-to-IN bedeutet, dass Artikel innerhalb der Korbstruktur neu geordnet werden, OUT-to-OUT bedeutet, dass Artikel der Kamera präsentiert werden, aber sofort in die Regale zurückgebracht werden, und OUT-to-IN bedeutet, dass Artikel in die Korbstruktur gelegt werden;
wobei eine Neuordnung von Objekten innerhalb der Korbstruktur (B) automatisch durch Verwendung des Objekterkennungs- und -verfolgungsmodells und des Bewegungsrichtungsklassifizierungsmodells identifiziert wird;
- wobei das Wiedererkennungsmodell und das Deep-Learning-Modells zur Erkennung von Veränderungen verwendet werden, um zusätzliche Konsistenzprüfungen bereitzustellen, wobei:
Die Vorhersagen des Deep-Learning-Modells werden auf die Bewegungsrichtung und die Start- und Endregionen einer Bewegung als zusätzliche Hinweise zur Klassifizierung der Start- und Endregionen der Bewegung angewendet;
und die vom Deep-Learning-Modells zur Erkennung von Veränderungen;
erkannten Änderungen werden mit den Ergebnissen des trainierten Objekterkennungs- und -verfolgungsmodells verglichen, um festzustellen, ob alle erkannten Änderungen durch korrekt verfolgte Objekte erklärt werden können.

2. Verfahren nach einem der vorhergehenden Ansprüche, wobei der Ergebnisdatensatz (rd) in einem numerischen oder alphanumerischen Format bereitgestellt wird und keine Bild- oder Videodaten enthält.

3. Verfahren nach einem der vorhergehenden Ansprüche, wobei das eingebettete Gerät (MD) mit einer Scan-Anwendung unter Verwendung mindestens einer Kamera (Ca) ausgestattet ist, die zum Scannen eines an einem Gegenstand angebrachten optischen Codes, insbesondere eines binären 2D-Codes, zur Berechnung eines Scan-Datensatzes für den jeweiligen Gegenstand verwendet wird, der als Referenzidentifikation für den jeweiligen Gegenstand für den Objekterkennungsalgorithmus (ODA) dienen kann.

4. Verfahren nach einem der vorhergehenden Ansprüche, wobei die Verarbeitungseinheit (PU) in eine integrierte Leiterplatte eingebettet ist und/oder wobei die Verarbeitungseinheit (PU) Teil eines FPGAs sein kann.

5. Verfahren nach einem der vorhergehenden Ansprüche, wobei der Objekterkennungsalgorithmus (ODA) auf einer Bounding Box oder einem ähnlichen Ansatz wie Centernet basiert, und wobei der Ergebnisdatensatz (rd) aus einer Liste von Boxkoordinaten zusammen mit Klassifizierungsergebnissen besteht und optional Metadaten, insbesondere Metadaten mit einem Zeitstempel, enthalten kann und/oder wobei der Ergebnisdatensatz (rd) keine Bilddaten des empfangenen Videostroms enthält.

6. Verfahren nach einem der Ansprüche 1 bis 5, wobei der Objekterkennungsalgorithmus (ODA) auf einem Heatmap-Ansatz basiert und wobei der Ergebnisdatensatz (rd) aus Heatmaps der erkannten Objekte, insbesondere in komprimierter Form, besteht und/oder wobei der Ergebnisdatensatz (rd) keine Bilddaten des empfangenen Videostroms enthält.

7. Verfahren nach einem der vorhergehenden Ansprüche, wobei das Objekterkennungs- und -verfolgungsmodell ein erstes Modul umfassen kann, das ein Merkmalsextraktionsmodul ist, das ein Merkmalspyramidenextraktionsnetzwerk zur Bereitstellung einer Merkmalspyramide in verschiedenen Bildauflösungsstufen umfassen kann.

8. Verfahren nach dem unmittelbar vorangehenden Anspruch, wobei das Netz zur Extraktion der Merkmalspyramide ein tiefes Vorwärts-CNN ist und in Bezug auf die Tiefe separierbare Faltungen umfassen kann.

9. Verfahren nach einem der vorhergehenden Ansprüche, wobei das Objekterkennungs- und -verfolgungsmodell ein zweites Modul mit einem Kopfnetzwerk umfassen kann, das auf alle oder eine Teilmenge der verschiedenen Ebenen der bereitgestellten Merkmalspyramide angewendet wird, um Bounding Boxes für zu erkennende Objekte vorherzusagen.

10. Verfahren nach einem der vorhergehenden Ansprüche, wobei das Objekterkennungs- und -verfolgungsmodell so konfiguriert ist, dass es auf dem eingebetteten Gerät (MD) ausgeführt wird, wobei die Ressourcen beschränkt sind, indem
- das Objekterkennungs- und -verfolgungsmodell auf Ganzzahloperationen anstelle von Gleitkommaoperationen unter Verwendung datengesteuerter Kompressionsalgorithmen basiert; und/oder
- das Modell für die Objekterkennung und -verfolgung beschnitten wird.

11. Eine Verarbeitungseinheit (PU), die in mindestens einem eingebetteten Gerät (MD) vorgesehen ist, das so konfiguriert ist, dass es das Verfahren nach einem der vorangehenden Verfahrensansprüche ausführt und Folgendes umfasst:
- Ein Registrierungsmodul (RM) zur Durchführung eines Registrierungsverfahrens;
- Eine Eingangsschnittstelle (II) zu mindestens einer Kamera (Ca) zum Empfang eines Videostroms;
- wobei die Verarbeitungseinheit (PU) zum Ausführen des Objekterkennungsalgorithmus (ODA) konfiguriert ist;
- Eine Ausgabeschnittstelle (OI) zur Bereitstellung des Ergebnisdatensatzes (rd).

12. Verarbeitungseinheit (PU) nach dem unmittelbar vorhergehenden Anspruch, wobei die Verarbeitungseinheit (PU) eine Schnittstelle zu mindestens einer externen Kamera (Ca2) aufweist, wobei die externe Kamera (Ca2) in das mindestens eine eingebettete Gerät integriert sein kann und/oder in eine externe Einheit, insbesondere in ein Kamera-Chipsatz-Modul (CCM), integriert sein kann, die im Datenaustausch mit der Verarbeitungseinheit (PU) steht.

13. Automatisiertes System zur verteilten Objekterkennung, das so konfiguriert ist, dass es das Verfahren nach einem der vorangehenden Verfahrensansprüche durchführt, umfassend:
- eine Verarbeitungseinheit (PU), die auf einem mobilen Gerät (MD) und/oder auf mindestens einem Kamera-Chipsatz-Modul (CCM) implementiert sein kann, und
- mindestens eine Kamera (Ca, Ca2) mit einer Schnittstelle zur Verarbeitungseinheit (PU).

14. Computerprogramm, das einen Computerprogrammcode umfasst, wobei der Computerprogrammcode, wenn er von einem Prozessor ausgeführt wird, eine Verarbeitungseinheit veranlasst, die Schritte des Verfahrens nach einem der vorangehenden Verfahrensansprüche durchzuführen.

## Revendications

1. Méthode informatisée de détection d'objets basée sur la vision par ordinateur en traitant les données vidéo d'au moins une caméra (Ca) à l'aide d'au moins une unité de traitement (PU) d'un dispositif embarqué (MD), avec les étapes suivantes :
- Fournir une procédure d'enregistrement pour enregistrer (S1) le dispositif intégré (MD) ;
- Lors de la réception (S2) d'un signal de déclenchement sur l'unité de traitement (PU) du dispositif embarqué (MD) en réponse à l'exécution réussie de la procédure d'enregistrement :
- Connecter (S3) le dispositif embarqué (MD) à une structure de panier (B) au moyen d'un dispositif de fixation (AM), la connexion (S3) comprenant l'établissement d'une connexion de données permettant l'échange de données entre le dispositif embarqué (MD) et la structure de panier (B) ou des composants de celle-ci ;
- Exécuter (S4) un algorithme de détection d'objets (ODA) localement sur l'unité de traitement (PU) du dispositif embarqué (MD) pour détecter automatiquement des objets dans la structure du panier (B) et fournir (S5) un ensemble de données de résultat (rd), dans lequel l'exécution (S4) de l'algorithme de détection d'objets comprend :
- Réception d'un flux vidéo (S41) de l'au moins une caméra (Ca) pendant l'agrégation des objets dans la structure du panier (B) via une interface d'entrée d'image (II) de l'unité de traitement (PU) ; et en parallèle :
- Accéder (S42) à un premier stockage sur le dispositif embarqué (MD) pour exécuter localement un modèle de détection et de suivi d'objet par apprentissage profond formé sur la base du flux vidéo reçu, dans lequel un algorithme de sous-échantillonnage est exécuté, qui sous-échantillonne le flux vidéo reçu avant d'accéder au modèle de détection et de suivi d'objet ; et
- Accès (S43) à une deuxième mémoire sur le dispositif embarqué (MD) pour l'exécution locale d'un modèle de réidentification par apprentissage profond entraîné et
- Accès (S44) à une troisième mémoire sur le dispositif embarqué (MD) pour l'exécution locale d'un modèle de détection de changement par apprentissage profond.
- Accès (S45) à un quatrième stockage sur le dispositif embarqué (MD) pour exécuter localement un modèle de classification de la direction des mouvements par apprentissage profond , dans lequel le modèle de classification des mouvements est entraîné sur des séquences vidéo de différentes personnes mettant des articles de shopping dans ou hors d'une structure de panier et prédit si une piste donnée se déroulant dans la vidéo a commencé ou s'est terminée à l'extérieur ou à l'intérieur de la structure de panier ;
dans lequel l'exécution de l'algorithme de détection d'objet (ODA) et en particulier l'exécution du modèle de détection et de suivi d'objet comprend la classification d'une direction de mouvement dans au moins quatre classes, en particulier dans une classe IN-to-OUT, IN-to-IN, OUT-to-OUT et dans une classe OUT-to-IN , dans laquelle IN-to-OUT signifie que les articles sont retirés de la structure du panier, IN-to-IN signifie que les articles sont reclassés à l'intérieur de la structure du panier, OUT-to-OUT signifie que les articles sont présentés à la caméra mais immédiatement replacés dans les étagères, et OUT-to-IN signifie que les articles sont placés dans la structure du panier
dans lequel une réorganisation des objets dans la structure du panier (B) est automatiquement identifiée à l'aide du modèle de détection et de suivi des objets et du modèle de classification de la direction du mouvement ;
dans lequel le modèle de réidentification et le modèle de détection des changements sont utilisés pour fournir des contrôles de cohérence supplémentaires, dans lequel :
Les prédictions du modèle d'apprentissage profond sont déployées sur la direction du mouvement et les régions de début et de fin d'une piste comme des indices supplémentaires pour classer les régions de début et de fin de la piste ;
et les changements détectés par le modèle de détection des changements sont comparés aux résultats du modèle de détection et de suivi des objets entraîné pour voir si tous les changements détectés peuvent être expliqués par des objets correctement suivis.

2. Méthode selon l'une des revendications précédentes, dans laquelle l'ensemble de données de résultat (rd) est fourni dans un format numérique ou alphanumérique et ne contient pas d'images ou de données vidéo.

3. Méthode selon l'une des revendications précédentes, dans laquelle le dispositif embarqué (MD) est équipé d'une application de balayage utilisant au moins une caméra (Ca) qui est utilisée pour balayer un code optique, en particulier un code 2D binaire, attaché à un article, pour calculer un ensemble de données de balayage pour l'article respectif, qui peut servir d'identification de référence pour l'article respectif pour l'algorithme de détection d'objet (ODA).

4. Méthode selon l'une des revendications précédentes, dans laquelle l'unité de traitement (PU) est intégrée dans une carte de circuit intégré et/ou dans laquelle l'unité de traitement (PU) peut faire partie d'un FPGA.

5. Méthode selon l'une des revendications précédentes, dans laquelle l'algorithme de détection d'objet (ODA) est basé sur une boîte englobante ou une approche similaire telle que centernet, et dans laquelle l'ensemble de données de résultat (rd) consiste en une liste de coordonnées de boîte avec des scores de classification et peut éventuellement contenir des métadonnées, en particulier des métadonnées avec un horodatage et/ou dans laquelle l'ensemble de données de résultat (rd) ne contient pas de données d'image du flux vidéo reçu.

6. Méthode selon l'une des revendications 1 à 5, dans laquelle l'algorithme de détection d'objet (ODA) est basé sur une approche de carte thermique et dans laquelle l'ensemble de données de résultat (rd) consiste en des cartes thermiques des objets détectés, en particulier sous forme comprimée et/ou dans laquelle l'ensemble de données de résultat (rd) ne contient pas de données d'image du flux vidéo reçu.

7. Méthode selon l'une des revendications précédentes, dans laquelle le modèle de détection et de suivi des objets peut comprendre un premier module qui est un module d'extraction de caractéristiques, qui peut comprendre un réseau d'extraction de pyramides de caractéristiques pour fournir une pyramide de caractéristiques à différents niveaux de résolution d'image.

8. Méthode selon la revendication directement précédente, dans laquelle le réseau d'extraction de la pyramide des caractéristiques est un CNN profond à avance directe et peut comprendre convolutions séparables en profondeur.

9. Méthode selon l'une des revendications précédentes, dans laquelle le modèle de détection et de suivi des objets peut comprendre un deuxième module avec un réseau de tête, qui est appliqué à tous les niveaux ou à un sous-ensemble des différents niveaux de la pyramide de caractéristiques fournie afin de prédire les boîtes de délimitation pour les objets à détecter.

10. Procédé selon l'une quelconque des revendications précédentes, dans lequel le modèle de détection et de suivi d'objet est configuré pour être exécuté sur le dispositif embarqué (MD), avec des ressources limitées, en ce sens que
- le modèle de détection et de suivi des objets est basé sur des opérations en nombres entiers au lieu d'opérations en virgule flottante en utilisant des algorithmes de compression axés sur les données ; et/ou
- le modèle de détection et de suivi des objets est élagué.

11. Une unité de traitement (PU), fournie dans au moins un dispositif embarqué (MD), qui est configurée pour exécuter le procédé selon l'une quelconque des revendications de procédé précédentes et qui comprend :
- Un module d'enregistrement (RM) pour l'exécution d'une procédure d'enregistrement ;
- Une interface d'entrée (II) vers au moins une caméra (Ca) pour recevoir un flux vidéo ;
- l'unité de traitement (PU) est configurée pour exécuter l'algorithme de détection d'objet (ODA) ;
- Une interface de sortie (OI) pour fournir l'ensemble de données de résultat (rd).

12. L'unité de traitement (PU) selon la revendication directement précédente, dans laquelle l'unité de traitement (PU) a une interface avec au moins une caméra externe (Ca2), dans laquelle la caméra externe (Ca2) peut être intégrée dans au moins un dispositif embarqué et/ou peut être intégrée dans une unité externe, en particulier dans un module caméra-chipset (CCM), étant en échange de données avec l'unité de traitement (PU).

13. Système automatisé de détection d'objets distribués, configuré pour exécuter la méthode selon l'une des revendications précédentes, comprenant :
- une unité de traitement (PU) qui peut être mise en oeuvre sur un appareil mobile (MD) et/ou sur au moins un module caméra-chipset (CCM) et
- au moins une caméra (Ca, Ca2) dotée d'une interface avec l'unité de traitement (PU).

14. Programme d'ordinateur comprenant un code de programme d'ordinateur, le code de programme d'ordinateur, lorsqu'il est exécuté par un processeur, permet à une unité de traitement d'exécuter les étapes de la méthode de l'une des revendications précédentes.
